# EUROPEAN PATENT APPLICATION

(11) **EP 4 668 623 A1**
(43) Date of publication of application: **24.12.2025**
(21) Application number: 23921741.7
(22) Date of filing: 15.02.2023
(51) Int. Cl.: H04L 1/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Taor, Simon Edward William
(86) International application number: PCT/CN2023/076135
(87) International publication number: WO 2024/168577

(57) **Abstract**

Provided in the embodiments of the present application are a wireless communication method and device, which can improve the data transmission performance of a zero-power-consumption device. The wireless communication method comprises: a zero-power-consumption device sending a first signal, wherein the first signal has at least been subjected to one instance of coding processing, which involves a first code, the first code being used by a receiving end to correct an error occurring in the first signal during a transmission process.

## Description

### TECHNICAL FIELD

Embodiments of the disclosure relate to the field of communications, and in particular to a method for wireless communication and a device.

### BACKGROUND

Zero-power devices have low complexity and low cost, can be maintenance-free and battery-free, can support power harvesting and/or backscattering communication, and can be deployed with a high density and a large scale at a lower cost. However, at present, zero-power devices have poor data transmission performance. Therefore, how to improve data transmission performance of zero-power devices is a problem that needs to be solved.

### SUMMARY

The embodiments of the disclosure provide a method for wireless communication and a device, which can improve data transmission performance of a zero-power device.

In a first aspect, provided is a method for wireless communication. The method includes that a zero-power device transmits a first signal.

The first signal has been subjected to at least one encoding. The at least one encoding includes a first encoding, and the first encoding is used for a receiving end to correct an error that occurs to the first signal during transmission of the first signal.

In a second aspect, provided is a method for wireless communication. The method includes that a communication device receives a first signal from a zero-power device.

The first signal has been subjected to at least one encoding. The at least one encoding includes a first encoding, and the first encoding is used for the communication device to correct an error that occurs to the first signal during transmission of the first signal.

In a third aspect, provided is a zero-power device for implementing the method in the first aspect above.

Specifically, the zero-power device includes a functional module for implementing the method in the first aspect above.

In a fourth aspect, provided is a communication device for implementing the method in the second aspect above.

Specifically, the communication device includes a functional module for implementing the method in the second aspect above.

In a fifth aspect, provided is a zero-power device, including a processor and a memory. The memory is configured to store a computer program, and the processor is configured to call and run the computer program stored in the memory to enable the zero-power device to perform the method in the first aspect above.

In a sixth aspect, provided is a communication device, including a processor and a memory. The memory is configured to store a computer program, and the processor is configured to call and run the computer program stored in the memory to enable the communication device to perform the method in the second aspect above.

In a seventh aspect, provided is an apparatus for implementing the method in any of the first and second aspects above.

Specifically, the apparatus includes a processor configured to call and run a computer program from a memory and run the computer program to enable a device installed with the apparatus to implement the method in any of the first and second aspects above.

In an eighth aspect, provided is a computer-readable storage medium for storing a computer program that enables a computer to implement the method in any of the first and second aspects above.

In a ninth aspect, provided is a computer program product including computer program instructions that enable a computer to implement the method in any of the first and second aspects above.

In a tenth aspect, provided is a computer program that, when run on a computer, causes the computer to implement the method in any of the first and second aspects above.

Through the above technical solutions, the first signal transmitted by the zero-power device has been subjected to at least the first encoding, and the receiving end can correct the error occurring to the first signal during transmission of the first signal based on the first encoding, thereby improving data transmission performance of the zero-power device.

### BRIEF DESCRIPTION OF THE DRAWINGS

FIG. 1 illustrates a diagram of architecture of a communication system to which embodiments of the disclosure are applied.
FIG. 2 illustrates a diagram of zero-power communication according to the disclosure.
FIG. 3 illustrates a diagram of backscattering communication according to the disclosure.
FIG. 4 illustrates a diagram of power harvesting according to the disclosure.
FIG. 5 illustrates a circuit diagram of resistive load modulation according to the disclosure.
FIG. 6 illustrates a diagram of non-return-to-zero encoding according to the disclosure.
FIG. 7 illustrates a diagram of unipolar return-to-zero encoding according to the disclosure.
FIG. 8 illustrates a diagram of Manchester encoding according to the disclosure.
FIG. 9 illustrates a diagram of Miller encoding according to the disclosure.
FIG. 10 illustrates a diagram of differential biphase encoding according to the disclosure.
FIG. 11 illustrates a diagram of differential encoding according to the disclosure.
FIG. 12 illustrates a diagram of data 0, data 1, start of frame (SOF) and end of frame (EOF) in pulse interval encoding according to the disclosure.
FIG. 13 illustrates a diagram of biphase space encoding (FM0) according to the disclosure.
FIG. 14 illustrates a diagram of FM0 symbols and FM0 symbol sequences in biphase space encoding (FM0) according to the disclosure.
FIG. 15 illustrates a flowchart of a method for wireless communication according to embodiments of the disclosure.
FIG. 16 illustrates a flowchart of signal transmission of a zero-power device according to embodiments of the disclosure.
FIG. 17 illustrates a diagram of data bit puncturing positions of multiple zero-power devices according to embodiments of the disclosure.
FIG. 18 illustrates a flowchart of transmission of a first signal with data bit puncturing according to embodiments of the disclosure.
FIG. 19 illustrates a diagram of data bit selection of multiple zero-power devices according to embodiments of the disclosure.
FIG. 20 illustrates a flowchart of transmission of a first signal with data bit selection according to embodiments of the disclosure.
FIG. 21 illustrates a flowchart of transmission of a first signal with modulated symbol puncturing according to embodiments of the disclosure.
FIG. 22 illustrates a flowchart of transmission of a first signal with modulated symbol selection according to embodiments of the disclosure.
FIG. 23 illustrates a diagram of time-domain resource puncturing positions of a zero-power device according to embodiments of the disclosure.
FIG. 24 illustrates another diagram of time-domain resource puncturing positions of a zero-power device according to embodiments of the disclosure.
FIG. 25 illustrates a flowchart of transmission of a first signal with time-domain resource puncturing according to embodiments of the disclosure.
FIG. 26 illustrates a diagram of time-domain resource selection of a zero-power device according to embodiments of the disclosure.
FIG. 27 illustrates another diagram of time-domain resource selection of a zero-power device according to embodiments of the disclosure.
FIG. 28 illustrates a flowchart of transmission of a first signal with time-domain resource selection according to embodiments of the disclosure.
FIG. 29 illustrates a block diagram of a zero-power device according to embodiments of the disclosure.
FIG. 30 illustrates a block diagram of a communication device according to embodiments of the disclosure.
FIG. 31 illustrates a block diagram of another communication device according to embodiments of the disclosure.
FIG. 32 illustrates a block diagram of an apparatus according to embodiments of the disclosure.
FIG. 33 illustrates a block diagram of a communication system according to embodiments of the disclosure.

### DETAILED DESCRIPTION

Technical solutions of the embodiments of the disclosure will be described below in conjunction with the drawings of the embodiments of the disclosure. Apparently, the described embodiments are some rather than all embodiments of the disclosure. All other embodiments obtained by those skilled in the art based on the embodiments of the disclosure without paying any inventive effort shall fall within the scope of protection of the disclosure.

The technical solutions of the embodiments of the disclosure may be applied to various communication systems, such as a global system of mobile communication (GSM) system, a code division multiple access (CDMA) system, a wideband code division multiple access (WCDMA) system, a general packet radio service (GPRS) system, a long term evolution (LTE) system, an advanced long term evolution (LTE-A) system, a new radio (RA) system, an evolved NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area networks (WLAN), an internet of things (IoT), a wireless fidelity (WiFi), a 5th-generation (5G) system, a 6th-generation (6G) system or other communication systems.

Generally, a traditional communication system supports a limited number of connections, and is easily achievable. However, with development of communication technologies, a mobile communication system will support not only traditional communication, but will also support for example device to device (D2D) communication, machine to machine (M2M) communication, machine type communication (MTC), vehicle to vehicle (V2V) communication, sidelink (SL) communication, vehicle to everything (V2X) communication. The embodiments of the disclosure may also be applied to these communication systems.

In some embodiments, the communication system of the embodiments of the disclosure may be applied to a carrier aggregation (CA) scenario, or may be applied to a dual connectivity (DC) scenario, or may be applied to a standalone (SA) network deployment scenario, or may be applied to a non-standalone (NSA) network deployment scenario.

In some embodiments, the communication system of the embodiments of the disclosure may be applied to an unlicensed spectrum. The unlicensed spectrum may be considered as a shared spectrum. Alternatively, the communication system of the embodiments of the disclosure may be applied to a licensed spectrum. The licensed spectrum may be considered as a non-shared spectrum.

In some embodiments, the communication system in the embodiments of the disclosure may be applied to an FR1 frequency band (corresponding to the frequency band range of 410 MHz to 7.125 GHz), or may be applied to an FR2 frequency band (corresponding to the frequency band range of 24.25 GHz to 52.6 GHz), or may be applied to a new frequency band, such as the high frequency band corresponding to the frequency band range of 52.6 GHz to 71 GHz or the frequency band range of 71 GHz to 114.25 GHz.

In the embodiments of the disclosure, various embodiments are described in conjunction with a network device and a terminal device. Herein, the terminal device may also be referred to as user equipment (UE), an access terminal, a subscriber unit, a subscriber station, a mobile site, a remote station, a remote terminal, a mobile device, a user terminal, a terminal, a wireless communication device, a subscriber agent, a user device or the like.

The terminal device may be a station (ST) in a WLAN, or may be a cellular phone, a cordless phone, a session initiation protocol (SIP) phone, a wireless local loop (WLL) station, a personal digital assistant (PDA) device, a hand-held device with a wireless communication function, a computing device or another processing device connected to a radio modem, a vehicle-mounted device, a wearable device, a terminal device in a next generation communication system for example an NR network, a terminal device in future evolved public land mobile network (PLMN) or the like.

In embodiments of the disclosure, the terminal device may be deployed on the land, including being indoor or outdoor, hand-held, wearable or vehicle-mounted; or the terminal device may be deployed on the water, for example on a ship; or may be deployed in the air, for example on a plane, a balloon, a satellite, or the like.

In embodiments of the disclosure, the terminal device may be a mobile phone, a pad, a computer with a radio transceiving function, a virtual reality (VR) terminal device, an augmented reality (AR) terminal device, a radio terminal device in industrial control, a radio terminal device in self-driving, a radio terminal device in remote medical, a radio terminal device in a smart grid, a radio terminal device in transportation safety, a radio terminal device in a smart city or a radio terminal device in a smart home, a vehicle-mounted communication device, a wireless communication chip/application specific integrated circuit (ASIC)/system on chip (SoC) or the like.

As an example, but not in a limiting way, in embodiments of the disclosure, the terminal device may also be a wearable device. The wearable device may also be referred to as a wearable smart device, and is a generic name of devices that are developed through the application of wearable technologies for intelligent design of daily wear, for example glasses, gloves, watches, clothes, and shoes. A wearable device is a portable device that is directly worn on a body or integrated into the clothes or accessories of a user. A wearable device is not only a hardware device, but also realizes strong functions through support of software and through data interaction and cloud interaction. Generic wearable smart devices include devices that have plentiful functions and large sizes and can realize all or some functions without depending on a smart phone, for example a smart watch or smart glasses, and also include devices that focus on only some type of application functions and need to be used in cooperation with other devices such as a smart phone, for example various smart bracelet and smart jewelries for performing physical sign monitoring.

In embodiments of the disclosure, the network device may be a device for communication with a mobile device. The network device may be an access point (AP) in a WLAN, or a base transceiver station (BTS) in a GSM or CDMA, or a NodeB (NB) in a WCDMA, or an evolutional NodeB (eNB or eNodeB) in a LTE, or a relay node or access point, or a vehicle-mounted device, or a wearable device, or a gNB or a transmission reception point (TRP) in an NR network, or a network device in a future evolved PLMN network, or a network device in a non terrestrial network (NTN).

As an example, but not in a limiting way, in embodiments of the disclosure, the network device may have mobility. For example, the network device may be a mobile device. In some embodiments, the network device may be a satellite, or a balloon station. For example, the satellite may be low earth orbit (LEO) satellite, a medium earth orbit (MEO) satellite, a geostationary earth orbit (GEO) satellite, a high elliptical orbit (HEO) satellite or the like. In some embodiments, the network device may also be a base station deployed on the land, in a water area, or the like.

In the embodiments of the disclosure, the network device may provide service for a cell, and a terminal device may communicate with the network device through a transmission resource (for example, a frequency-domain resource, or a spectral resource) used by the cell. The cell may be a cell corresponding to the network device (for example, a base station). The cell may belong to a macro base station, or may belong to a base station corresponding to a small cell. The small cell here may include such as a Metro cell, a Micro cell, a Pico cell, or a Femto cell; and these small cells have the characteristics of a small coverage and a low transmit power, and may be applicable for providing high-rate data transmission services.

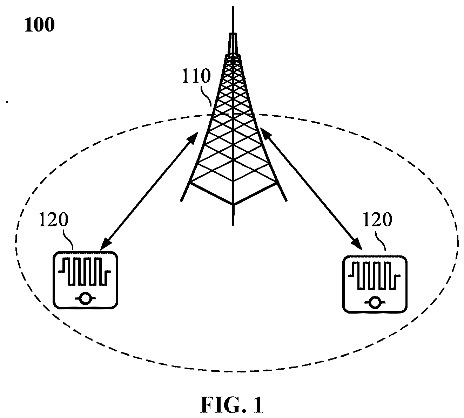

Exemplarily, a communication system 100 to which the embodiments of the disclosure are applied is as illustrated in FIG. 1. The communication system 100 may include a network device 110. The network device 110 may be a device communicating with a terminal device 120 (or referred to as a zero-power terminal, or a zero-power device). The network device 110 may provide communication coverage for a specific geographical area, and may communicate with the terminal device within the coverage.

FIG. 1 exemplarily illustrates one network device and two terminal devices. Optionally, the communication system 100 may include multiple network devices, and there may be another number of terminal devices within the coverage of each network device, which is not limited in the embodiments of the disclosure.

In some embodiments, the communication system 100 may further include other network entities such as a network controller and a mobility management entity, which is not limited in the embodiments of the disclosure.

It is to be understood that devices with a communication function in the network/system in the embodiments of the disclosure may be referred to as communication devices. With the communication system 100 illustrated in FIG. 1 as an example, the communication devices may include a network device 110 and terminal devices 120 that have a communication function. The network device 110 and the terminal devices 120 may be particular devices described above, which will not be described herein again. The communication devices may further include other devices in the communication system 100, for example a network controller, a mobility management entity and other network entities, which is not limited in the embodiments of the disclosure.

It is to be understood that the terms "system" and "network" herein are often used exchangeably. The term "and/or" herein merely describes a relation between associated objects, representing that three relations may exist. For example, A and/or B may represent following three cases: existence of A alone, existence of both A and B, and existence of B alone. Additionally, the character "/" generally indicates that the contextual objects are in an "or" relationship.

The terms used in the embodiments of the disclosure are intended for explaining specific embodiments of the disclosure only, rather than limiting. The terms such as "first", "second", "third" and "fourth" in the description, claims and appended drawings of the disclosure are used to distinguish different objects, rather than describing specific orders. Furthermore, the terms "comprise" and "have" as well as any variants thereof are intended to cover non-exclusive inclusions.

It is to be understood that "indicate" referred to in the embodiments of the disclosure may be direct indication or indirect indication, or may refer to that there is an association relationship. By way of example, "A indicates B" may refer to that A directly indicates B, for example B may be acquired through A. "A indicates B" may also refer to that A indirectly indicates B, for example, A indicates C and B may be acquired through C. "A indicates B" may also refer to that there is an association relationship between A and B.

In the description of the embodiments of the disclosure, the term "correspond" may mean that there is a direct correspondence or indirect correspondence between two objects, or may mean that there is an association relationship between the two objects, or may mean a relationship between indicating and being indicated or a relationship between configuring and being configured.

In the embodiments of the disclosure, "predefined" or "preconfigured" may be realized by codes or forms or other manners that can be used to indicate relevant information which are pre-stored in a device (for example, a terminal device and a network device). The particular implementation is not limited in the disclosure. For example, "predefined" may refer to being defined in a protocol.

In the embodiments of the disclosure, the "protocol" may refer to a standard protocol in the field of communications, for example evolution of existing long-term evolution (LTE) protocols, new radio (NR) protocols, WiFi protocols or other communication system related protocols. Protocol types are not limited in the embodiments of the disclosure.

For better understanding of the embodiments of the disclosure, zero-power communication technologies involved in the disclosure will be described.

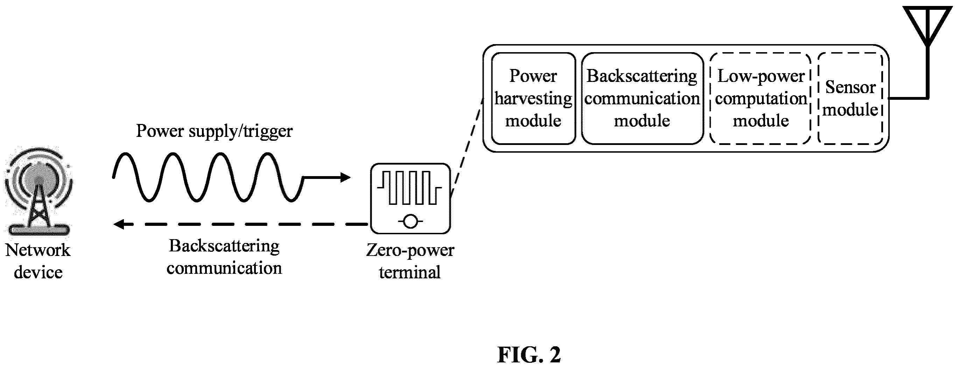

Power harvesting and/or backscattering communication technologies are used in zero-power communication. A zero-power communication network is composed of a network device and a zero-power device, as illustrated in FIG. 2. The network device is configured to transmit a radio power supply signal and a downlink communication signal to the zero-power device, and to receive a backscattered signal from the zero-power device. A basic zero-power device includes a power harvesting module, a backscattering communication module and a low-power computation module. In addition, the zero-power device can also have a memory or a sensor for storing some basic information (such as an item identifier) or acquiring sensing data such as ambient temperature and ambient humidity.

The key technologies of zero-power communication mainly include radio frequency (RF) power harvesting and backscattering communication.

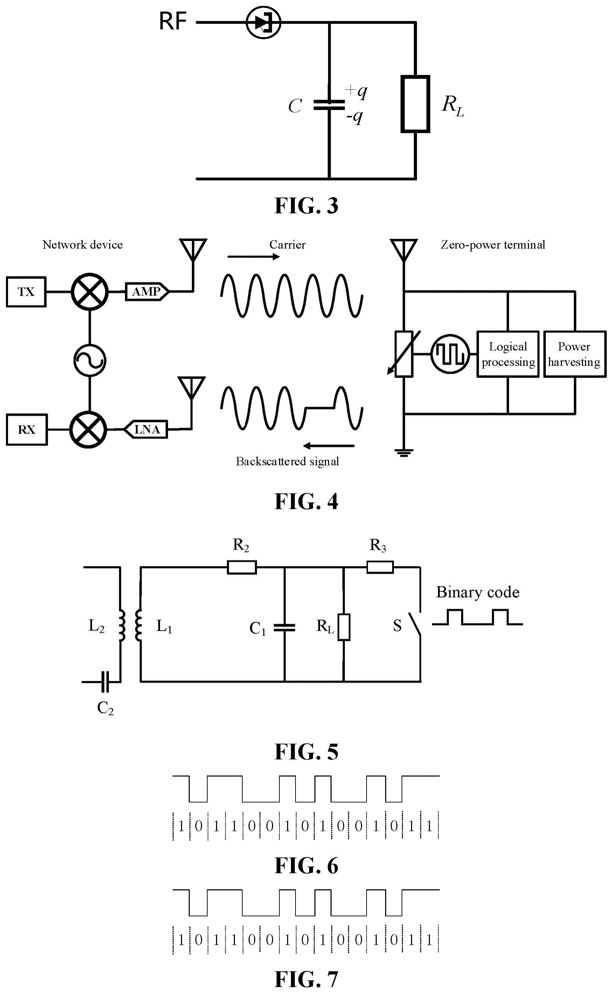

Specifically, RF power harvesting may be as illustrated in FIG. 3. An RF power harvesting module realizes collection of electromagnetic wave power in space based on the principle of electromagnetic induction, to obtain the power required to drive operation of the zero-power device, for example, driving a low-power demodulation and modulation module, a sensor and memory reading. Therefore, the zero-power device requires no traditional battery.

Specifically, backscattering communication may be as illustrated in FIG. 4. A zero-power communication terminal receives a radio signal from a network, modulates the radio signal to load information to be transmitted, and radiates out the modulated signal from the antenna. Such an information transmission process is referred to as backscattering communication. Backscattering is inseparable from load modulation functionally. In load modulation, circuit parameters of an oscillation loop in the zero-power device are adjusted and controlled according to the beat of a data stream, so that parameters such as the impedance magnitude of an electronic tag are changed accordingly, thus completing modulation. The load modulation technology mainly includes resistive load modulation and capacitive load modulation. In resistive load modulation, a resistor is connected in parallel to the load, and the resistor is switched on or off under control of a binary data stream, as illustrated in FIG. 5. The on/off of the resistor will cause a change in a voltage in the circuit, thus realizing amplitude shift keying (ASK) modulation, that is, signal modulation and transmission are realized by adjusting the amplitude of the backscattered signal of the zero-power device. Similarly, in capacitive load modulation, the resonant frequency of the circuit can be changed by on/off of a capacitor, thus realizing frequency shift keying (FSK) modulation, that is, signal modulation and transmission are realized by adjusting the operating frequency of the backscattered signal of the zero-power device.

It can be seen that the zero-power device modulates information of an incoming signal by means of load modulation, thereby realizing a backscattering communication process. Therefore, the zero-power device has significant advantages: (1) the zero-power device does not actively transmit a signal, and thus no complex radio frequency link (such as a power amplifier (PA) and/or a radio frequency filter) is required; (2) the zero-power device does not need to actively generate a high-frequency signal, and thus no high-frequency crystal oscillator is required; (3) with the help of backscattering communication, signal transmission of the zero-power device does not need to consume power of the zero-power device itself.

Due to the significant advantages such as extremely low cost, zero power consumption, and a small size, the zero-power communication can be widely used in various industries, including logistics, smart warehousing, smart agriculture, power and electricity, and industrial Internet and the like for vertical industries; and can also be applied to personal applications such as smart wearables and smart homes.

For better understanding of the embodiments of the disclosure, encoding manners for the zero-power communication involved in the disclosure will be described.

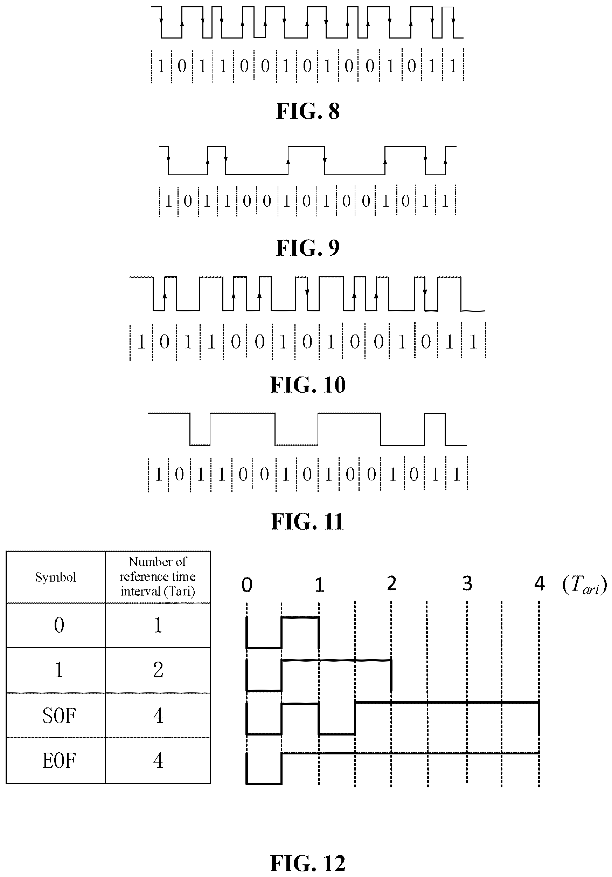

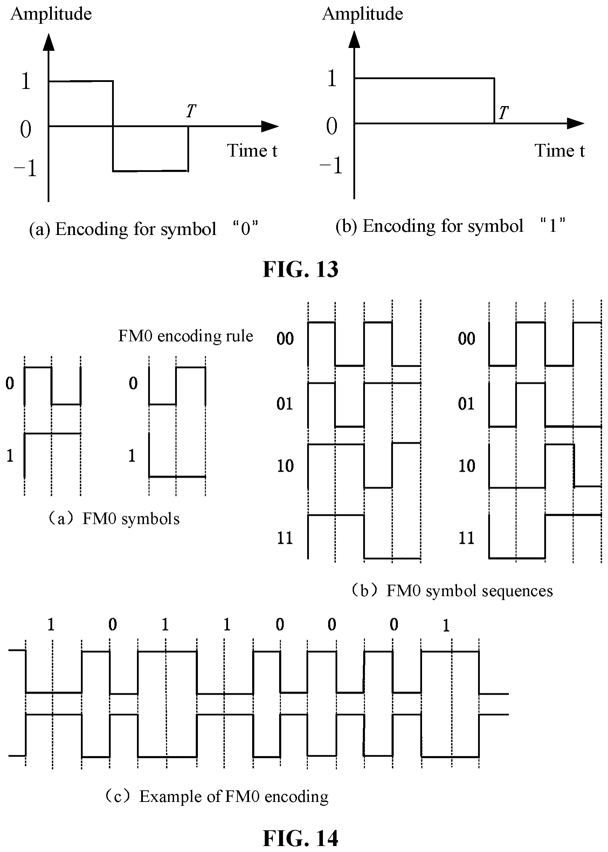

Data transmitted by an electronic tag can be represented as binary "1" and "0" in different forms of codes. A radio frequency identification system typically uses one of the following encoding manners: non-return-to-zero (NRZ) encoding, Manchester encoding, Unipolar return-to-zero (RZ) encoding, differential bi-phase (DBP) encoding, Miller encoding or differential encoding. Generally speaking, 0 and 1 are represented by different pulse signals.
(1) Non-return zero (NRZ) encoding: in NRZ encoding, binary "1" is represented by a high level, and binary "0" is represented by a low level, as illustrated in FIG. 6. In the waveform as illustrated in FIG. 6, there is no gap between symbols and codes are transmitted throughout the entire symbol period, and thus this is referred to as non-return-to-zero encoding.
(2) Unipolar return-to-zero encoding: when a code 1 is transmitted, a positive current is emitted, but the duration of the positive current is shorter than the time width of one symbol, that is, a narrow pulse is emitted; and when a code 0 is transmitted, no current is emitted at all. The rule of unipolar return-to-zero encoding is as illustrated in Figure 7. Specifically, the non-return-to-zero inverted encoding and the unipolar return-to-zero encoding involve both unipolar codes; but the non-return-to-zero inverted encoding has a duty cycle of 100%, and the unipolar return-to-zero encoding has a duty cycle of 50%.
(3) Manchester encoding: Manchester encoding is also referred to as split-phase coding or bi-phase code. In Manchester encoding, 1 and 0 are distinguished from each other by varying phases of voltage jumps. Jumping from high to low represents 1 and jumping from low to high represents 0. The rule of Manchester encoding may be as illustrated in FIG. 8.
(4) Miller encoding: which is improved Manchester encoding. In Miller encoding, a binary "1" is represented by any edge in half of a bit period, and a binary "0" is represented by an unchanged level in a next bit period. That is, in Miller encoding, data "1" is represented with a level transition at a bit center, and data "0" is represented if there is no level transition at the bit center. In addition, when consecutive binary 0s occur, level transition occurs at the bit ending moment. The rule of Miller encoding is as illustrated in FIG. 9. In Miller encoding, level alternation occurs at the beginning of the bit period, and bit beats are easily reconstructable for the receiver.
(5) Differential biphase (DBP) encoding: in DBP encoding, a binary "0" is represented by any edge in half of a bit period, and a binary "1" is represented where there is no edge. Furthermore, a level is inverted at the beginning of each bit period. Therefore, bit beats are easily reconstructable for the receiver. The rule of differential biphase encoding may be as illustrated in FIG. 10.
(6) Differential encoding: in differential encoding, each binary "1" to be transmitted will cause a change in the level of a signal, while the level of the signal keeps unchanged for a binary "0". The rule of differential encoding may be as illustrated in FIG. 11.
(7) Pulse interval encoding (PIE): PIE is a coding method used by a reader/writer to transmit data to an electronic tag. PIE is a coding method in which there are different time intervals for "0s" and "1s". This coding method is based on a continuous pulse with a fixed interval, and a repetition period of the pulse varies depending on "0" and "1". Typically, the duration of each binary code is an integer multiple of one clock cycle. There are four symbols in PIE, namely, data 0, data 1, start of frame (SOF) and end of frame (EOF), and the symbols are 1, 2, 4 and 4 times of a reference time interval (Tari), respectively. The definitions of the data 0, the data 1, the SOF and the EOF are as illustrated in FIG. 12. It can be seen that situations other than the data 0 and the data 1 can be easily defined in PIE. In order to determine the type of transmitted symbols, the electronic tag needs to measure the intervals of high/low pulse transitions illustrated in the drawing.
(8) Biphase space encoding (FM0): frequency modulation zero (FM0) is a coding method used by an electronic tag to transmit data to a reader/writer. The rule of FM0 is that: there is a level change in both the middle of time and at a time edge for a symbol "0"; and there is a level change only at a time edge for a symbol "1". The rule of FM0 is as illustrated in FIG. 13. Features of FM0: there are three transitions for the symbol "0", including one transition at the starting position of bit time and one transition at the middle position of bit time; and the symbol "1" has one transition, at the starting position of the bit time. FM0 symbols, FM0 symbol sequences, and an example of FM0 encoding may be as illustrated in FIG. 14.

For better understanding of the embodiments of the disclosure, a power supply signal and a trigger signal in a zero-power communication system involved the disclosure will be described.

**Power supply signal:** the carrier of the power supply signal may be a base station, a smart phone, a smart gateway, a charging station, a micro base station, or the like. From the perspective of a frequency band, radio waves used for power supply may be low-frequency, medium-frequency, high-frequency, or the like. From the perspective of a waveform, radio waves used for power supply may be sine waves, square waves, triangular waves, pulse waves, rectangular waves, or the like. In addition, the radio waves may be continuous waves or discontinuous waves (i.e., a certain time interruption is allowed). The power supply signal may be a certain signal specified in the 3^{RD} generation partnership project (3GPP) standards, for example, a sounding reference signal (SRS), a physical uplink shared channel (PUSCH), a physical random-access channel (PRACH), a physical uplink control channel (PUCCH), a physical downlink control channel (PDCCH), a physical downlink shared channel (PDSCH), or a physical broadcast channel (PBCH).

Trigger signal/control information: the carrier of the trigger signal may be a base station, a smart phone, a smart gateway, or the like. From the perspective of a frequency band, the radio waves used for power supply may be low-frequency, medium-frequency, high-frequency, or the like. From the perspective of a waveform, the radio waves used for power supply may be sine waves, square waves, triangular waves, pulse waves, rectangular waves, or the like. In addition, the radio waves may be continuous waves or discontinuous waves (i.e., a certain time interruption is allowed). The trigger signal may be a certain signal specified in 3GPP standards, for example, an SRS, a PUSCH, a PRACH, a PUCCH, a PDCCH, a PDSCH, or a PBCH; or may be a new signal.

For better understanding of the embodiments of the disclosure, classification of zero-power devices involved in the disclosure will be described.

Optionally, zero-power devices may be divided into passive zero-power devices, semi-passive zero-power devices, and active zero-power devices based on the energy source and the usage of the zero-power devices.

### 1) Passive zero-power device

A zero-power device requires no built-in battery. When the zero-power device is close to a network device (such as a reader/writer of a radio frequency identification (RFID) system), the zero-power device is in the near-field range formed by radiation of an antenna of the network device. Therefore, the antenna of the zero-power device generates an induced current through electromagnetic induction, and the induced current drives the circuit in a low-power chip of the zero-power device, to realize signal demodulation for a forward link (downlink, link from the network device to the zero-power device) and signal modulation for a backward link (uplink, link from the zero-power device to network device). Regarding a backscattering link, the zero-power device performs signal transmission through backscattering.

It can be seen that the passive zero-power device does not need to be driven by a built-in battery no matter for the forward link or the backward link, and is truly a zero-power device.

The passive zero-power device requires no battery, and has both a simple radiofrequency circuit and a simple baseband circuit. For example, devices such as low-noise amplifiers (LNAs), power amplifiers (PAs), crystal oscillators, analog-to-digital converters (ADCs) or the like are not required. Therefore, the passive zero-power device has many advantages such as a small size, a light weight, a low price, and a long service life.

A passive zero-power terminal may also support other power harvesting manners. By collecting power in the environment (such as light energy, thermal energy, kinetic energy, and mechanical energy), the energy for driving circuits is obtained to support communication of the terminal device.

### 2) Semi-passive zero-power device

A semi-passive zero-power device itself is also not equipped with a conventional battery, but can use a radio frequency (RF) power harvesting module to collect radio wave energy or use a power harvesting module to collect energy from the environment (such as solar energy, thermal energy, and mechanical vibration energy), while storing the collected energy into an energy storage unit (such as a capacitor). After obtaining the energy, the energy storage unit can drive the circuit in a low-power chip of the zero-power device, to realize signal demodulation for a forward link and signal modulation for a backward link. Regarding a backscattering link, the zero-power device performs signal transmission through backscattering.

It can be seen that the semi-passive zero-power device does not need to be driven by a built-in battery no matter for the forward link or the backward link. Though the energy stored by the capacitor is used in operation, the energy comes from the radio energy collected by the power harvesting module, so the semi-passive zero-power device is also truly a zero-power device.

The semi-passive zero-power device inherits many advantages of the passive zero-power device, and thus has many advantages such as a small size, a light weight, a price and a long service life.

### 3) Active zero-power device

Zero-power devices used in some scenarios may also be active zero-power devices. Such terminals can have built-in batteries (conventional batteries, such as dry batteries, and rechargeable lithium batteries). The batteries are used to drive the circuit in a low-power chip of the zero-power device, to realize the signal demodulation for a forward link and signal modulation for a backward link. However, regarding a backscattering link, the zero-power device performs signal transmission through backscattering. Therefore, the "zero power" of such a terminal mainly lies in that the signal transmission on the backward link does not require power of the terminal itself, but uses backscattering. Though the active zero-power device uses a battery, the active zero-power device has low power consumption due to use of the ultra-low power communication technology; therefore, the service life of the battery can be greatly improved compared with the related art.

The active zero-power device has a built-in battery to supply power for an RFID chip to increase the reading/writing distance of the tag and improve the reliability of communication. Therefore, the active zero-power device can be applied in some scenarios that have high requirements in aspects such as a communication distance and a reading delay.

Some zero-power terminals, such as semi-passive zero-power terminals or active zero-power terminals, may have the capability of active transmission; that is, communication in the backward link may also be implemented through active transmission in addition to backscattering.

As well known, the service types of zero-power IoT and other IoT service types will also mainly be uplink services. Accordingly, based on transmitter types, zero-power devices may be classified into backscattering-based zero-power devices, active transmitter-based zero-power devices, and zero-power devices having both backscattering and active transmitters.

### 1) Backscattering-based zero-power device

Such zero-power devices transmit uplink data through backscattering as described above. Such devices have no active transmitter that performs active transmission, but only have a backscattering transmitter. Therefore, when transmitting data, such terminals need the network device to provide carriers, and such terminal devices perform backscattering based on the carriers, to realize data transmission.

### 2) Active transmitter-based zero-power device

Such zero-power devices use an active transmitter with active transmission capability to perform uplink data transmission. Therefore, in data transmission, such zero-power devices can transmit data by using their own active transmitters without need of carriers provided by the network device. Active transmitters suitable for zero-power devices may be, for example, ultra-low power ASK transmitters, or ultra-low power FSK transmitters. Based on current implementations, the overall power consumption of such transmitters can be reduced to 400 to 600 uw when transmitting a signal of 100 uw.

### 3) Zero-power device having both backscattering and active transmitter.

Such terminals can support not only backscattering, but can also support active transmitters. The terminal can determine to use which uplink signal transmission method according to different situations (such as the battery level, and available environmental energy), or based on the scheduling of the network device: whether to use the backscattering or to use the active transmitter to perform active transmission.

For better understanding of the embodiments of the disclosure, cellular passive IoT involved in the disclosure will be described.

Cellular IoT is booming. For example, 3GPP has standardized IoT technologies such as narrow band internet of things (NB-IoT), machine type communication (MTC), and reduced capability (RedCap). However, there are still many scenarios where the IoT communication requirements cannot be met with existing technologies.

The scenarios include for example a harsh communication environment. Some IoT scenarios may face extreme environments such as a high temperature, an extremely low temperature, high humidity, a high pressure, high radiation or high-speed movement. Examples include an ultra-high voltage transformer substation, monitoring of the tracks of a high-speed train, environmental monitoring in alpine zones, and an industrial production line. In these scenarios, the existing IoT terminals would be unable to work due to limitation to the working environment of conventional power supplies. In addition, extreme working environments are disadvantageous to IoT maintenance, such as battery replacement.

The scenarios include for another example a requirement in the terminal form of an extremely small size. Some IoT communication scenarios, such as food traceability, commodity circulation, and smart wearables, require the terminals to have extremely small sizes to facilitate use in these scenarios. For example, IoT terminals used for commodity management in the circulation link are usually in the form of electronic tags and are embedded into commodity packaging in a very compact form. For another example, lightweighted wearable devices can improve user experience while meeting user needs.

The scenarios include for another example a requirement in the IoT communication of an extremely low cost. Numerous IoT communication scenarios require the cost of IoT terminals to be low enough to improve competitiveness relative to other alternative technologies. For example, in logistics or warehousing scenarios, in order to facilitate the management of a large number of circulating items, an loT terminal may be attached to each item, so as to complete the accurate management of the entire logistics process and cycle through the communication between the terminal and a logistics network. These scenarios require the price of IoT terminals to be competitive enough.

Therefore, in order to cover these unmet IoT communication needs, ultra-low-cost, extremely small-size, battery-free/maintenance-free IoT also needs to be developed for cellular networks, and zero-power IoT can just meet this demand.

It should be additionally pointed out that the zero-power IoT may also be referred to as ambient power enabled IoT, or ambient IoT for short. Specifically, an ambient IoT device means an IoT device that uses various environmental energies such as radio frequency energy, light energy, solar energy, thermal energy and mechanical energy. An ambient IoT device may have no energy storage capacity or may have very limited energy storage capacity (such as using a capacitor with a capacity of tens of microfarads (uF)).

In some embodiments, the ambient IoT device may be used in at least the following four types of scenarios: object recognition, such as logistics, management of products in a production line, and supply chain management; environmental monitoring, such as monitoring of temperatures, humidity and harmful gas in working environment and natural environment; positioning, such as indoor positioning, intelligent object search, and item positioning in a production line; and intelligent control, such as intelligent control of various electrical appliances in smart homes (turning on/off of an air conditioner, temperature adjustment), and intelligent control of various facilities in agricultural greenhouses (automatic watering, and automatic fertilization).

For better understanding of the embodiments of the disclosure, forward error correction (FEC) involved the disclosure will be described.

The FEC technology is an encoding technology widely used in communication systems, has the advantage of automatically correcting errors in data transmission. The core idea of FEC is that the transmitter can perform redundant encoding on the information by using an error correction code, to achieve the purpose of correcting transmission errors.

Taking a typical block code as an example, its basic principle is that: at the sending end, k-bit information is encoded as a block, to which (n-k) bit redundant check information is appended, to form a codeword with a length of n bits. After the codeword reaches a receiving end through a channel, if an error is within a correctable range, an error bit can be checked and corrected by decoding, thus resisting the interference caused by the channel and improving the reliability of the communication system. Through FEC processing, at the cost of redundancy overhead, the bit error rate of the system can be effectively reduced, the transmission distance can be prolonged, and the system cost can be reduced.

The performance of the FEC solutions is mainly decided by three main factors: a coding overhead, a decision mode and a codeword scheme.
(1) Coding overhead: the ratio of the check bit length (n-k) to the information length k is referred to as a coding overhead. The greater the overhead, the higher the theoretical limit performance of the FEC scheme. However, the increase is not linear. The greater the overhead, the smaller the performance improvement brought by the increase of overhead. The selection of the overhead needs to be determined according to the specific requirements of system design.
(2) Decision mode: decoding method of FEC include hard decision decoding and soft decision decoding. In hard decision, input of an FEC decoder is 0 and 1 levels. Because of low complexity and a mature theory, hard decision has been widely used in many scenarios. In soft decision, input of an FEC decoder is a multi-stage quantized level. At the same code rate, soft decision has a higher gain than hard decision, but has an exponentially increasing decoding complexity.
(3) Codeword scheme: after the overhead and the decision mode are determined, the main research topic of FEC is to design an excellent codeword scheme to have performance closer to the Shannon limit.

There are mainly three types of FEC codes--a repetition code, a block code, and a convolutional code.

Repetition code: same data is transmitted repeatedly for multiple times, which is a repetition code. A receiving end performs decoding according to the principle that the minority obeys the majority. For example, a transmitting end encodes 0 to be 000 for transmission; and if 001, 010, or 100 is received, it is determined that transmitted data is 0. The transmitting end encodes 1 to be 111 for transmission; and if 110, 101, or 011 is received, it is determined that transmitted data is 1. There is a big problem with the repetition code: a very low transmission efficiency, which is only 1/3.

Block code: an information sequence of an information source is divided into independent blocks for processing and encoding, which is called a block code. In encoding, each k information bits are divided into a block for independent processing, and are transformed into a binary code block with a length of n (n > k).

Specifically, there are many types of block codes, such as a Reed-Solomon code, a Gray code, a bose-chaudhuri-hocquenghem (BCH) code, a parity check code, and a Hamming code.

Convolutional code: if a convolutional code is described by (n, k, m), k is the number of bits input to a convolutional encoder each time, n is a convolutional code output namely an n-tuple codeword corresponding to each k-tuple codeword, m is an encoding memory order, that is, the order of k tuple of the convolutional encoder, and m+1 = K is the encoding constraint length, where m is called a constraint length. By the convolutional code, a k-tuple input symbol is encoded into an n-tuple output symbol. The convolutional code is used for bitstreams or symbol streams of any length. Although other algorithms are sometimes used, the most often used soft decision algorithm is the Viterbi algorithm. With the increase of the constraint length of convolutional code, Viterbi decoding can achieve an approximately optimal decoding efficiency, but this comes at the expense of exponentially increasing coding complexity.

For systems with multiple times of encoding, all levels of encoding are regarded as an entirety of encoding, and this is referred to as a concatenated code. A classical (algebraic) block code and a convolutional code are usually combined in the concatenated code. The convolutional code of a finite length is responsible for most of the work, and the block code of a larger block length erases any error caused by the convolutional decoder.

At present, what can approach Shannon's capacity limit is a type of codes called Turbo-like, including a Turbo code, a low-density parity check codes (LDPC), and a repeat-accumulate (RA) code. Such codes have the characteristic that: the idea of random encoding is partially introduced, and large code lengths, and decoding of such codes is realized by the iterative decoding algorithm close to maximum posterior probability decoding. A Turbo code is an iterative soft decision scheme, and is also a concatenated code. It combines several simple convolutional codes and crossovers to produce a block code. The performance of the Turbo code can partially reach the Shannon limit.

For better understanding of the embodiments of the disclosure, problems solved in the disclosure will be described.

Zero-power devices have low complexity and low cost, can be maintenance-free and battery-free, and may be divided into passive zero-power terminals, semi-passive zero-power terminals, active zero-power terminals, and the like. By collecting energy in the environment (such as radio frequency energy, light energy, thermal energy, mechanical energy, kinetic energy, etc.), energy for communication is obtained. Regarding the communication mode, zero-power devices can support backscattering, or can further support active transmission.

Zero-power devices can be deployed with a high density and a large scale at a lower cost. Moreover, due to the maintenance-free and battery-free characteristics, zero-power devices have huge application potential in aspects such as industrial sensor networks, smart homes, smart agriculture, logistics and warehousing, smart wearables, and health care. A zero-power device can be combined with a sensor device to carry out environmental monitoring, danger warning, alarm, and /or the like.

When a backscattering transmission is used, the zero-power device conducts backscattering by performing modulation such as on-off keying (OOK)/amplitude shift keying (ASK)/phase shift keying (PSK)/frequency shift keying (FSK) on an incoming wave because the zero-power device itself produces no carrier, resulting in poor data transmission performance. Therefore, it is necessary to design an encoding method, which can improve the data transmission performance of backscattering communication of the zero-power device, and can also be applied to the active transmission communication of the zero-power device. Moreover, if multiple zero-power devices use the same time-frequency resources for data transmission, they will be mutual interference, affecting data transmission performance. How to improve data transmission performance when multiple zero-power devices use the same time-frequency resources to transmit data is an urgent problem to be solved.

Based on the above problems, the disclosure proposes a signal transmission scheme in zero-power communication. A first signal transmitted by a zero-power device has undergone at least a first encoding, and a receiving end can correct an error occurring to the first signal during transmission of the first signal based on the first encoding, thereby improving data transmission performance of the zero-power device. Further, puncturing or selective transmission processing can be applied to part of bits/symbols/time-domain resources, thereby reducing mutual interference between multiple zero-power devices in simultaneously transmitting data, and improving data transmission performance in a multi-user scenario.

For convenience of understanding the technical solution of the embodiments of the disclosure, the technical solution of the disclosure will be described in detail via particular embodiments. Any combination formed by following relevant technologies as optional solutions and the technical solutions of the embodiments of the disclosure shall fall within the scope of protection of the embodiments of the disclosure. The embodiments of the disclosure include at least part of the following contents.

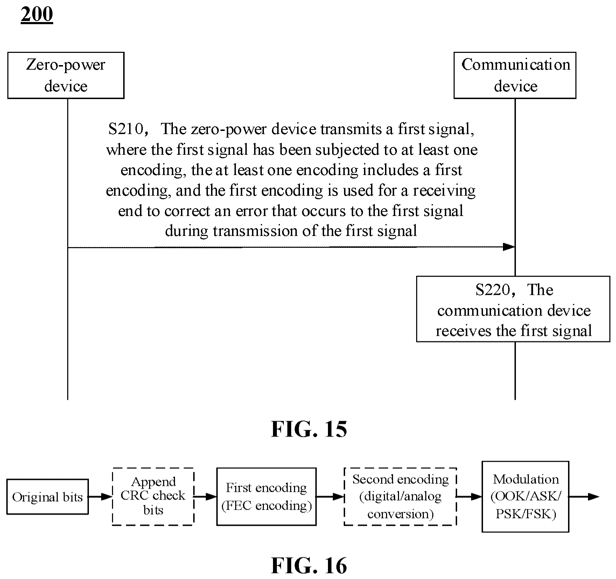

FIG. 15 illustrates a schematic flowchart of a method 200 for wireless communication according to embodiments of the disclosure. As illustrated in FIG. 15, the method 200 for wireless communication may include at least part of following contents.

At S210, a zero-power device transmits a first signal. The first signal has been subjected to at least one encoding. The at least one encoding includes a first encoding, and the first encoding is used for a receiving end to correct an error that occurs to the first signal during transmission of the first signal.

At S220, a communication device receives the first signal.

In the embodiments of the disclosure, the first signal transmitted by the zero-power device has been subjected to at least the first encoding, and the receiving end can correct the error occurring to the first signal during transmission of the first signal based on the first encoding, namely, the communication device can correct the error occurring to the first signal during transmission of the first signal based on the first encoding, thereby improving data transmission performance of the zero-power device.

It is to be noted that zero-power devices have a simple structure, low complexity, and low cost, and can support power harvesting of environmental energy (such as light energy, thermal energy, radio frequency energy, mechanical energy, and kinetic energy) to obtain energy required for communication. The zero-power devices can support the backscattering, and some zero-power devices can further support the active transmission. Embodiments of the disclosure are directed to improve data transmission performance of a zero-power device in communication, especially data transmission performance in a multi-user communication application scenario.

In the embodiments of the disclosure, a zero-power device may also be referred to as an "ambient power enabled IoT device or an ambient IoT device". Specifically, an ambient IoT device means an IoT device that uses various environmental energies such as radio frequency energy, light energy, solar energy, thermal energy and mechanical energy. An ambient IoT device may have no energy storage capacity or may have very limited energy storage capacity (such as using a capacitor with a capacity of tens of microfarads (uF)).

In some embodiments, the communication device may be a network device (such as a base station). Alternatively, the communication device is an access point (AP). Alternatively, the communication device is a reader/writer or a read/write device. Alternatively, the communication device is a terminal device. Alternatively, the communication device is a Station (STA). Alternatively, the communication device is a relay device. Of course, the communication device may also be other devices, which is not limited in the embodiments of the disclosure.

In some embodiments, the first signal is a backscattered signal, or the first signal is a signal actively transmitted by the zero-power device.

In some embodiments, the communication device may transmit a second signal to the zero-power device. The second signal is a backscattered signal, or the second signal is a signal transmitted by the communication device actively.

Specifically, the design of the second signal may be the same as that of the first signal, and the reference may be made to the relevant description of the first signal, which will not be described herein again.

In some embodiments, the first encoding is forward error correction (FEC) encoding. Of course, the first encoding may be another encoding manner having an error correction capability, which is not limited in the embodiments of the disclosure.

In some embodiments, the first signal includes a redundant error-correcting code with error correction capability. That is, during the first encoding, the zero-power device adds a redundant error-correcting code with error correction capability to transmitted original bits, so as to achieve the purposes of reducing the bit error rate of the received signal, enhancing the data transmission performance, and improving the coverage.

In some embodiments, the redundant error-correcting code includes but is not limited to at least one of: a block code, a convolutional code, a concatenated code, a Turbo-like code, a cyclic redundancy check (CRC) code, or a repetition code.

Specifically, the block code may include a Reed-Solomon code, a Gray code, a BCH code, a parity check code, a Hamming code, and/or the like.

Specifically, if a convolutional code is described by (n, k, m), k is the number of bits input to a convolutional encoder each time, n is a convolutional code output namely an n-tuple codeword corresponding to each k-tuple codeword, m is an encoding memory order, that is, the order of a k tuple of the convolutional encoder, and m+1 = K is the encoding constraint length, where m is called a constraint length. By the convolutional code, a k-tuple input symbol is encoded into an n-tuple output symbol.

Specifically, a concatenated code: combines a block code and a convolutional code.

Specifically, the Turbo-like code may be a Turbo code, an LDPC code, a repeat-accumulate (RA) code, or the like.

It is to be noted that, for the block code, the convolutional code, the concatenated code, the Turbo-like code, the repetition code, and the like, the reference may be made to the above description, which will not be repeated herein.

In some embodiments, the redundant error-correcting code includes at least the CRC code in a case that a bit length of the first signal before being subjected to the first encoding is less than or equal to N, where N is a positive integer. That is, in a case that the bit length of the first signal before being subjected to the first encoding is less than or equal to N, the communication device may perform error correction on the first signal by the CRC code.

In some embodiments, a value of N is a length of CRC check bits in the first signal; or a value of N is M*L, where M is a length of CRC check bits in the first signal, and L is a scaling factor.

The CRC check bits are used for the receiving end to determine whether the first signal is successfully received.

That is, in the embodiments of the disclosure, the communication device may determine, based on the CRC check bits, whether the first signal is successfully received.

Alternatively, the value of L may be {1/2, 1/3, 1, 2, 3...}.

In some embodiments, a nodulation manner for the first signal is at least one of: amplitude shift keying (ASK) modulation, on-off keying (OOK) modulation, frequency shift keying (FSK) modulation, or phase shift keying (PSK) modulation.

In some embodiments, the at least one encoding includes a second encoding. The second encoding is performed after the first encoding, and is used for implementing digital-to-analog conversion.

In some embodiments, the second encoding is at least one of: non-return-to-zero encoding, unipolar return-to-zero encoding, Manchester encoding, Miller encoding, differential biphase encoding, differential encoding, pulse interval encoding, or biphase space encoding.

In some embodiments, in a case that the at least one encoding includes the second encoding, a modulation manner for the first signal is at least one of: amplitude shift keying (ASK) modulation, or on-off keying (OOK) modulation.

Specifically, the OOK and ASK modulation types support the second encoding. The second encoding is used for data transmission, and is used for implementing digital-to-analog conversion to convert 0 and 1 bits into corresponding levels. The PSK and FSK modulation types do not support the second encoding.

In some embodiments, the first signal includes CRC check bits. The CRC check bits are used for the receiving end to determine whether the first signal is successfully received.

Specifically, the CRC check bits are appended to the original bits to mainly enable the receiving end to check, in signal reception, the signal transmitted by the zero-power device, and to determine whether the data transmitted by the zero-power device is successfully received (that is, error detection). Considering that data packets in communication of the zero-power device are usually small, in order to reduce the overhead caused by appending CRC check bits, a polynomial with lower overhead needs to be selected for the corresponding CRC check bits. For example, the number of CRC check bits used is < = 8.

In some embodiments, the signal transmission procedure of the zero-power device may be as illustrated in FIG. 16, and the signal transmitted by the zero-power device may be a backscattered signal or a signal actively transmitted by the zero-power device. It should be noted that the flowchart illustrated in FIG. 16 include part of modules involved in signal transmission processing, and it is not excluded that other additional modules of processing may be provided between these modules.

It is to be noted that "append CRC check bits" and "second encoding" in FIG. 16 correspond to dotted boxes, indicating optional operations. For example, the original bits are transmitted using a repetition code directly, in which case there is no appending of CRC check bits.

In some embodiments, data bits carried in the first signal before modulation have been subjected to interleaving. Optionally, interleaving manners are different for different zero-power devices, or interleaving manners are the same for different zero-power devices.

In some embodiments, in a case that the interleaving manners are different for different zero-power devices, an interleaving manner used by the zero-power device is determined based on at least one of: an identifier of the zero-power device, an identifier of a group to which the zero-power device belongs, or a data transmission pattern corresponding to the first signal.

Specifically, the zero-power device may perform interleaving processing on the encoded bits. All zero-power devices may use the same interleaving manner; or, all zero-power devices may use different interleaving manners, for example, interleaving manners are determined based on the identifiers of the zero-power devices, or based on patterns used.

In some application scenarios of zero-power devices, such as asset inventory and environmental monitoring, there are often multiple zero-power devices performing data transmission simultaneously. When multiple zero-power devices use the same time-domain and/or frequency-domain resources for data transmission, mutual interference may occur. For the zero-power devices, since a simple modulation manner such as OOK, FSK, ASK and/or PSK is used, when the multiple zero-power devices perform transmission on the same time-domain and/or frequency-domain resources, the data transmission performance is poor, and it is difficult to perform data reception, zero-power device identification and the like at the receiving end. Therefore, when there is collision between data transmission of the multiple zero-power devices, a data reception error may be caused, resulting in retransmission, and increasing the delay. As such, for applications such as asset inventory, a large number of terminals cannot be processed at the same time, resulting in low inventory efficiency. For applications such as environmental monitoring, abnormal situations cannot be handled in a timely manner. Based on this, the embodiments of the disclosure propose that the disclosure may perform the processing of puncturing or selective transmission on part of bits/symbols/time-domain resources, to improve the data transmission performance when multiple zero-power devices use the same time-domain and/or frequency-domain resources for data transmission. The probability of successful data reception can be improved even when different zero-power devices use the same time-domain and/or frequency-domain resources for data transmission.

In some embodiments, as Example 1, data bits carried in the first signal before modulation have been subjected to puncturing.

The first signal excludes a modulated symbol corresponding to a data bit at a puncturing position, and/or no modulated symbol is transmitted on a time-domain resource and/or a frequency-domain resource of the modulated symbol corresponding to the data bit at the puncturing position.

Alternatively, a data bit at a puncturing position in the first signal is fixed to be a first target value, or a modulated symbol corresponding to a data bit at a puncturing position in the first signal is fixed to be a first target value, or no modulation is performed on a data bit at a puncturing position in the first signal.

Optionally, in Example 1, data bit puncturing positions are different for different zero-power devices.

Specifically, for example, in a case that the zero-power device performs puncturing on data bits, the modulated symbol corresponding to the data bit at the puncturing position is not transmitted. Correspondingly, no modulated symbol is transmitted on the time-domain resource and/or the frequency-domain resource of the modulated symbol corresponding to the data bit at the puncturing position. That is, instead of rearranging and successively transmitting the data bits after the puncturing, some data bit(s) are not transmitted during data transmission due to being punctured.

Specifically, for another example, in a case that the zero-power device performs puncturing on data bits, the data bit at the puncturing position is fixed to be the first target value, or the modulated symbol corresponding to the data bit at the puncturing position is fixed to be the first target value, or no modulation is performed on the data bit at the puncturing position.

Specifically, when transmitting a signal, the zero-power device performs encoding using an encoding manner capable of error correction (i.e., the first encoding). Therefore, the receiving end (i.e., the communication device) can still receive and process data correctly even if some modulated symbol(s)/data bit(s) encounter errors during transmission. Based on this characteristic, in Example 1, when transmitting the first signal, the zero-power device may perform puncturing processing on the data bits carried by the first signal prior to the modulation, where puncturing positions are different for different zero-power devices, so that mutual interference between signals when different zero-power devices use the same time-domain and/or frequency-domain resources for data transmission can be reduced, the probability of successful data reception by the multiple zero-power devices can be improved, and the influence of data collision on signal transmission can be reduced.

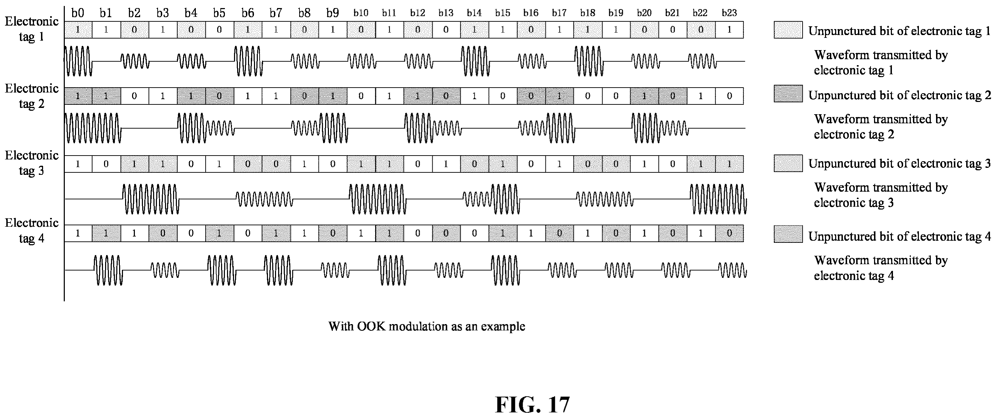

Specifically, for example, as illustrated in FIG. 17, data bit puncturing positions are different for different zero-power devices (that is, the electronic Tags in FIG. 17), and only modulated symbols corresponding to unpunctured data bits are transmitted. Here, depiction is made in FIG. 17 with OOK modulation as an example.

Optionally, in Example 1, data bit puncturing position(s) corresponding to the first signal are determined based on a data transmission pattern corresponding to the first signal. That is, the zero-power device may determine the data bit puncturing position(s) corresponding to the first signal based on the data transmission pattern corresponding to the first signal. Optionally, the data transmission pattern is a sequence composed of first value(s) and second value(s). The first value represents puncturing and the second value represents no puncturing. For example, the first value is 0 and the second value is 1. Alternatively, the first value is 1 and the second value is 0. Alternatively, the first value and the second value are other values, which is not limited in this embodiment.

Optionally, in Example 1, each value in the data transmission pattern is associated with S data bits, where S is a positive integer. Optionally, the S data bits may be consecutive or discrete.

Specifically, for example, in a case of S = 1, the data transmission pattern is periodically applied to data bit processing. For example, the data transmission pattern is composed of 10 bits, and the encoded bit sequence to be transmitted is composed of 100 bits. Every 10 consecutive bits may be taken as a group, and the transmission status (i.e., punctured or not) of each bit in the group is determined using the data transmission pattern. Alternatively, bits are grouped according to a result obtained by taking the bit index modulo 10 and then adding X (X is from 0 to the total number of bits in the data transmission pattern), where each bit corresponds to a respective group.

Specifically, in a case of S > 1 and that the S data bits are consecutive, the data transmission pattern is periodically applied to data bit processing.

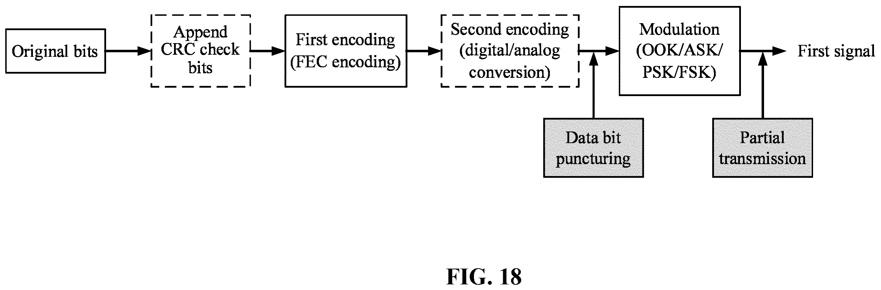

Optionally, in Example 1, the transmission procedure of the first signal with data bit puncturing may be as illustrated in FIG. 18. It is to be noted that "append CRC check bits" and "second encoding" in FIG. 18 correspond to dotted boxes, indicating optional operations.

In some embodiments, as Example 2, data bits carried in the first signal before modulation have been subjected to selection.

The first signal excludes a modulated symbol corresponding to a data bit unselected, and/or no modulated symbol is transmitted on a time-domain resource and/or a frequency-domain resource of the modulated symbol corresponding to the data bit unselected.

Alternatively, a data bit unselected in the first signal is fixed to be a first target value, or a modulated symbol corresponding to a data bit unselected in the first signal is fixed to be a first target value, or no modulation is performed on a data bit unselected in the first signal.

In some embodiments, in Example 2, data bits selected by different zero-power devices are different.

Specifically, when transmitting a signal, the zero-power device performs encoding using an encoding manner capable of error correction (i.e., the first encoding). Therefore, the receiving end (i.e., the communication device) can still receive and process data correctly even if some modulated symbol(s)/data bit(s) encounter errors during transmission. Based on this characteristic, in Example 2, when transmitting the first signal, the zero-power device may perform selection processing on the data bits carried by the first signal prior to the modulation, where data bits selected by different zero-power devices are different, so that mutual interference between signals when different zero-power devices use the same time-domain and/or frequency-domain resources for data transmission can be reduced, the probability of successful data reception by the multiple zero-power devices can be improved, and the influence of data collision on signal transmission can be reduced.

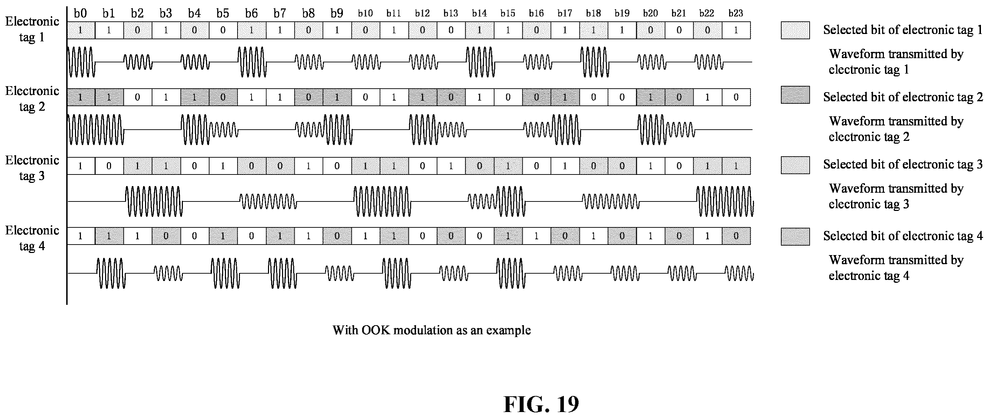

Specifically, for example, as illustrated in FIG. 19, data bits selected by different zero-power devices (that is, the electronic Tags in FIG. 19) are different, and only modulated symbols corresponding to selected data bits are transmitted. Here, depiction is made in FIG. 19 with OOK modulation as an example.

Optionally, in Example 2, the data bits carried in the first signal before modulation are selected based on a data transmission pattern corresponding to the first signal. That is, the zero-power device may select data bits corresponding to the first signal based on the data transmission pattern corresponding to the first signal. Optionally, the data transmission pattern is a sequence composed of first value(s) and second value(s). The first value represents non-selection and the second value represents selection. For example, the first value is 0 and the second value is 1. Alternatively, the first value is 1 and the second value is 0. Alternatively, the first value and the second value are other values, which is not limited in this embodiment.

Optionally, in Example 2, each value in the data transmission pattern is associated with S data bits, where S is a positive integer. Optionally, the S data bits may be consecutive or discrete.

Specifically, for example, in a case of S = 1, the data transmission pattern is periodically applied to data bit processing. For example, the data transmission pattern is composed of 10 bits, and the encoded bit sequence to be transmitted is composed of 100 bits. Every 10 consecutive bits may be taken as a group, and the transmission status (i.e., selected or not) of each bit in the group is determined using the data transmission pattern. Alternatively, the bits are grouped according to a result obtained by taking the bit index modulo 10 and then adding X (X is from 0 to the total number of bits in the data transmission pattern), where each bit corresponds to a respective group.

Specifically, in a case of S > 1 and that the S data bits are consecutive, the data transmission pattern is periodically applied to data bit processing.

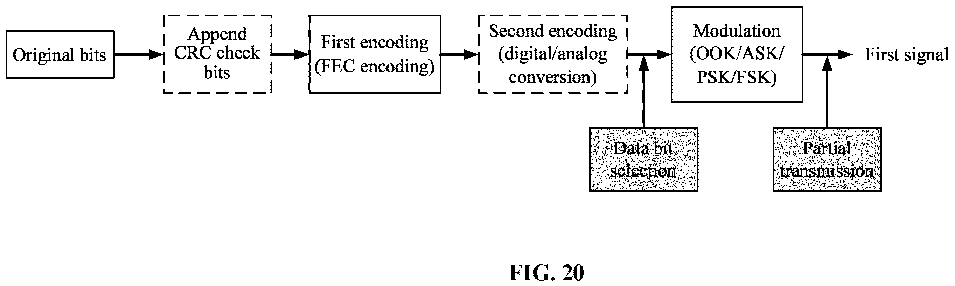

Optionally, in Example 2, the transmission procedure of the first signal with data bit selection may be as illustrated in FIG. 20. It is to be noted that "append CRC check bits" and "second encoding" in FIG. 20 correspond to dotted boxes, indicating optional operations.

In some embodiments, as Example 3, modulated symbols carried in the first signal have been subjected to puncturing.

The first signal excludes a modulated symbol at a puncturing position, and/or no modulated symbol is transmitted on a time-domain resource and/or a frequency-domain resource of the modulated symbol at the puncturing position.

Alternatively, a modulated symbol at a puncturing position in the first signal is fixed to be a second target value.

In this example, the puncturing may be performed at the symbol level. That is, the puncturing is performed on the modulated symbols, rather than performing selection or puncturing on the encoded bits to be transmitted.

Optionally, in Example 3, modulated symbol puncturing positions are different for different zero-power devices.

Specifically, when transmitting a signal, the zero-power device performs encoding using an encoding manner capable of error correction (i.e., the first encoding). Therefore, the receiving end (i.e., the communication device) can still receive and process data correctly even if some modulated symbol(s)/data bit(s) encounter errors during transmission. Based on this characteristic, in Example 3, when transmitting the first signal, the zero-power device may perform puncturing processing on the modulated symbols carried by the first signal after modulation, where modulated symbol puncturing positions are different for different zero-power devices, so that mutual interference between signals when different zero-power devices use the same time-domain and/or frequency-domain resources for data transmission can be reduced, the probability of successful data reception by the multiple zero-power devices can be improved, and the influence of data collision on signal transmission can be reduced.

Optionally, in Example 3, modulated symbol puncturing position(s) corresponding to the first signal are determined based on a data transmission pattern corresponding to the first signal. That is, the zero-power device may determine the modulated symbol puncturing position(s) corresponding to the first signal based on the data transmission pattern corresponding to the first signal. Optionally, the data transmission pattern is a sequence composed of first value(s) and second value(s). The first value represents puncturing and the second value represents no puncturing. For example, the first value is 0 and the second value is 1. Alternatively, the first value is 1 and the second value is 0. Alternatively, the first value and the second value are other values, which is not limited in this embodiment.

Optionally, in Example 3, each value in the data transmission pattern is associated with W modulated symbols, where W is a positive integer. Optionally, the W modulated symbols may be consecutive or discrete.

Specifically, for example, in a case of W = 1, the data transmission pattern is periodically applied to modulated symbol processing; or in a case of W > 1 and that the W modulated symbols are consecutive, the data transmission pattern is periodically applied to modulated symbol processing.

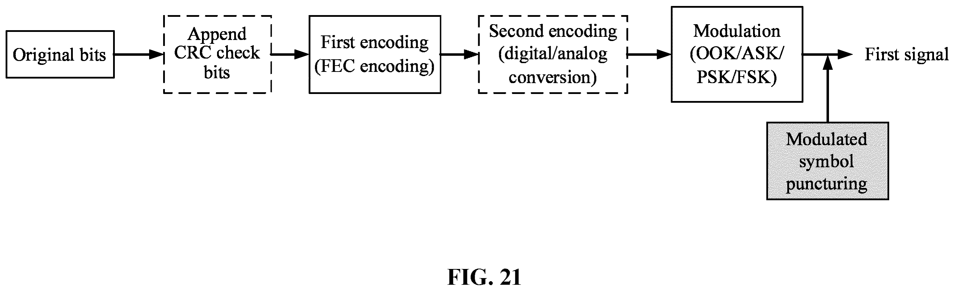

Optionally, in Example 3, the transmission procedure of the first signal with modulated symbol puncturing may be as illustrated in FIG. 21. It is to be noted that "append CRC check bits" and "second encoding" in FIG. 21 correspond to dotted boxes, indicating optional operations.

In some embodiments, as Example 4, modulated symbols carried in the first signal have been subjected to selection.

The first signal excludes a modulated symbol unselected, and/or no modulated symbol is transmitted on a time-domain resource and/or a frequency-domain resource of the modulated symbol unselected.

Alternatively, a modulated symbol unselected in the first signal is fixed to be a second target value.

In this example, the selection may be performed at the symbol level. That is, selection is performed on the modulated symbols, rather than performing selection or puncturing on the encoded bits to be transmitted.

Optionally, in Example 4, modulated symbols selected by different zero-power devices are different.

Specifically, when transmitting a signal, the zero-power device performs encoding using an encoding manner capable of error correction (i.e., the first encoding). Therefore, the receiving end (i.e., the communication device) can still receive and process data correctly even if some modulated symbol(s)/data bit(s) encounter errors during transmission. Based on this characteristic, in Example 4, when transmitting the first signal, the zero-power device may perform selection processing on the modulated symbols carried by the first signal after modulation, where modulated symbols selected by different zero-power devices are different, so that mutual interference between signals when different zero-power devices use the same time-domain and/or frequency-domain resources for data transmission can be reduced, the probability of successful data reception by the multiple zero-power devices can be improved, and the influence of data collision on signal transmission can be reduced.

Optionally, in Example 4, the modulated symbols in the first signal are selected based on a data transmission pattern corresponding to the first signal. That is, the zero-power device may select the modulated symbols in the first signal based on the data transmission pattern corresponding to the first signal. Optionally, the data transmission pattern is a sequence composed of first value(s) and second value(s). The first value represents non-selection and the second value represents selection. For example, the first value is 0 and the second value is 1. Alternatively, the first value is 1 and the second value is 0. Alternatively, the first value and the second value are other values, which is not limited in this embodiment.

Optionally, in Example 4, each value in the data transmission pattern is associated with W modulated symbols, where W is a positive integer. Optionally, the W modulated symbols may be consecutive or discrete.

Specifically, for example, in a case of W = 1, the data transmission pattern is periodically applied to modulated symbol processing; or in a case of W > 1 and that the W modulated symbols are consecutive, the data transmission pattern is periodically applied to modulated symbol processing.

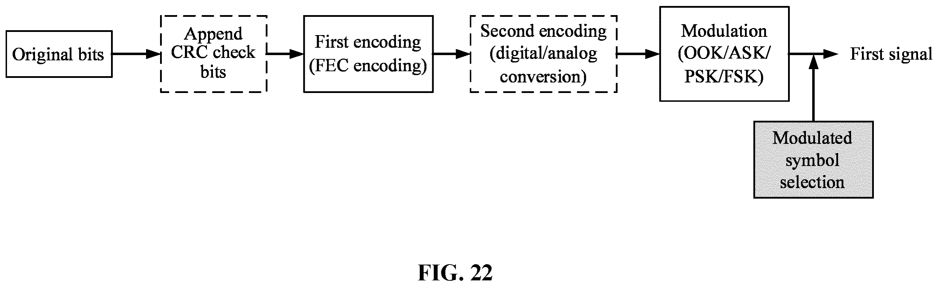

Optionally, in Example 4, the transmission procedure of the first signal with modulated symbol selection may be as illustrated in FIG. 22. It is to be noted that "append CRC check bits" and "second encoding" in FIG. 22 correspond to dotted boxes, indicating optional operations.

In some embodiments, in Examples 1 to 2 above, the first target value may be predefined by a protocol, or the first target value may be configured by a network.

In some embodiments, in Examples 3 to 4 above, the second target value may be predefined by a protocol, or the second target value may be configured by a network.

In some embodiments, in Examples 1 to 4 above, for OOK modulation and ASK modulation: after selection/puncturing processing of data bits/modulated symbols, one modulated symbol has two transmission states including State 1: normal transmission and State 2: abnormal transmission. Optionally, for State 2: one implementation is to perform no transmission, and another alternative implementation is to transmit a fixed modulated symbol (symbols modulated as 0, symbols modulated as 1, or other fixed symbols may be transmitted fixedly). For FSK: similarly, for State 2, abnormal transmission means no symbol modulation is performed at a corresponding modulation frequency point. For PSK: similarly, for State 2, abnormal transmission means no symbol transmission. That is, for State 2: encoded bits are not modulated, and no backscattering or active transmission is performed on the corresponding time-domain transmission resource; alternatively, modulated symbols are not transmitted, and no backscattering or active transmission is performed on the corresponding time-domain transmission resource.

In some embodiments, in Examples 1 to 4 above, a number or proportion of the first values or the second values in the data transmission pattern does not exceed a first threshold. Optionally, the first threshold is determined based on at least one of: a data transmission code rate, a transport block size (TBS), or a data encoding manner.

Specifically, in order to ensure the data transmission performance required for operation, the number of punctured or untransmitted data (bits/symbols) cannot exceed a threshold. The threshold is related to the code rate, TBS, encoding manner, and/or the like during data transmission.

In some embodiments, in Examples 1 to 4 above, before the zero-power device transmits the first signal, the zero-power device transmits a first sequence. The first sequence includes but is not limited to at least one of: part or all of identity information of the zero-power device, data control information corresponding to the first signal, or indication information of a data transmission pattern corresponding to the first signal. Specifically, when performing communication, the zero-power device firstly transmits a first sequence, and then determines a corresponding data transmission pattern based on the first sequence.

Optionally, identity information of the zero-power device may include but is not limited to at least one of: an identifier of the zero-power device, an identifier of a group to which the zero-power device belongs, or a cell identifier.

Optionally, the data control information corresponding to the first signal includes at least one of: a data TBS, an encoding manner, a code rate, or the like.

Optionally, regarding indication information of the data transmission pattern corresponding to the first signal: if the first sequence itself can be associated with the data transmission pattern, the indication information of the data transmission pattern corresponding to the first signal may be omitted from the first sequence; otherwise, the first sequence may carry the indication information of the data transmission pattern corresponding to the first signal, to indicate the data transmission pattern used.

Optionally, CRC check bits in the first signal are scrambled based on part or all of the information in the first sequence.

In some embodiments, the first sequence is a preamble sequence used in an access procedure, or the first sequence is a sequence carrying relevant information of the zero-power device.

In some embodiments, the data transmission pattern is determined based on at least one of: scheduling information, data control information (such as a data TBS, an encoding manner, and/or a code rate), an identifier of the zero-power device, an identifier of a group to which the zero-power device belongs, a cell identifier, or a pre-transmitted sequence (such as the first sequence).

In some embodiments, the data transmission pattern is obtained by expanding an initial data transmission pattern based on at least one of: a data transmission code rate, a transport block size (TBS), or a data encoding manner.

In some embodiments, the initial data transmission pattern is predefined by a protocol, or the initial data transmission pattern is configured by a network.

In some embodiments, the data transmission pattern is configured or indicated by a network device. Specifically, the network device may configure or indicate a specific data transmission pattern. Optionally, this mechanism may be applied to unicast/multicast/groupcast communication. For a unicast scenario, the zero-power device directly uses the data transmission pattern indicated by the network device. For a multicast/groupcast scenario, the zero-power device may apply, based on the data transmission pattern indicated by the network device, a cyclic shift to the data transmission pattern, and a cyclic shift value may be determined based on the identifier of the zero-power device or the identifier of the group to which the zero-power device belongs. For example, when the zero-power device actively initiates communication (non-dynamic scheduling), that is, the first signal is a signal transmitted by the zero-power device actively, if the network device performs a UE dedicated configuration, the data transmission pattern configured by the network is used.

In some embodiments, the data transmission pattern is generated based on a parameter configured or indicated by the network device. Specifically, the network device may indicate parameters related to generation of the data transmission pattern, and the zero-power device may uniquely determine a data transmission pattern based on these parameters and a preset generation mode. Optionally, this mechanism may be applied to unicast/multicast/groupcast communication. For a unicast scenario, the zero-power device directly uses the data transmission pattern indicated by the network device. For a multicast/groupcast scenario, the zero-power device may apply, based on the data transmission pattern indicated by the network device, a cyclic shift to the data transmission pattern, and a cyclic shift value may be determined based on the identifier of the zero-power device or the identifier of the group to which the zero-power device belongs.

In some embodiments, the data transmission pattern is generated by the zero-power device based on at least one of: an identifier of the zero-power device, an identifier of a group to which the zero-power device belongs, or a cell identifier. Specifically, when the zero-power device actively initiates communication (non-dynamic scheduling), that is, the first signal is a signal transmitted by the zero-power device actively, the zero-power device may generate a data transmission pattern based on at least one of: an identifier of the zero-power device, an identifier of a group to which the zero-power device belongs, or a cell identifier.

In some embodiments, the data transmission pattern is a target data transmission pattern among multiple preset data transmission patterns. Optionally, the target data transmission pattern is indicated by the network device, or the target data transmission pattern is determined by the zero-power device based on at least one of: an identifier of the zero-power device, an identifier of a group to which the zero-power device belongs, or a cell identifier. Specifically, a unicast scenario is preferred, in which the zero-power device may directly determine the target data transmission pattern based on a data transmission pattern index indicated by the network. A multicast/groupcast scenario is not preferred, in which similarly the target data transmission pattern may be determined based on the data transmission pattern index indicated by the network, so as to apply a cyclic shift to the target data transmission pattern. Optionally, when initiating communication, the zero-power device can monitor a downlink signal (a periodic common signal) to obtain a common configuration of data transmission patterns (that is, multiple preset data transmission patterns).

In some embodiments, the data transmission pattern is a target data transmission pattern in a target data transmission pattern set among multiple preset data transmission pattern sets. Optionally, the target data transmission pattern set is indicated by the network device, and the target data transmission pattern is selected by the zero-power device randomly or the target data transmission pattern is determined by the zero-power device based on at least one of: the identifier of the zero-power device, the identifier of the group to which the zero-power device belongs, or the cell identifier. Specifically, this mechanism is applicable for a multicast/unicast/groupcast scenario, where the zero-power device first determines a data transmission pattern set to be used, and further determines a specific target data transmission pattern to be used in transmission. Optionally, the target data transmission pattern may be randomly selected, or the target data transmission pattern may be determined based on the identifier of the zero-power device, the identifier of the group to which the zero-power device belongs, the cell identifier and/or the like.

In some embodiments, the data transmission pattern is determined based on a first sequence associated with the data transmission pattern. Optionally, an association relation between the data transmission pattern and the first sequence is predefined by a protocol, or is configured or indicated by the network device. Optionally, the data transmission pattern may be in a one-to-one or one-to-multiple relationship with the first sequence(s).

In some embodiments, in data reception, if knowing a data transmission pattern used by the zero-power device when transmitting a signal, a communication device (receiving end) performs the data reception based on the data transmission pattern. For example, unpunctured or selected data bits/modulated symbols are determined based on the data transmission pattern; and a punctured or unselected data bit/modulated symbol is regarded as a fixed value (a 0/1 bit, or a symbol corresponding thereto), or reliability of the punctured or unselected data bit/modulated symbol is initialized to the lowest during decoding. That is, in decoding, the unselected or punctured data bit has an initialized prior probability different from that of other normally transmitted data bits. Specifically, if the communication device (receiving end) does not know the data transmission pattern used by the zero-power device, or if there may be multiple zero-power devices performing data transmission (broadcast/multicast), the communication device (receiving end) needs to use all data transmission patterns for reception. If the zero-power device(s) transmit first sequence(s) before data transmission, the communication device (receiving end) may determine one or more candidate data transmission patterns from a data transmission pattern set based on the received first sequence(s), and perform reception based on the one or more candidate data transmission patterns.

In some embodiments, as Example 5, time-domain resources in time-frequency resources corresponding to the first signal have been subjected to puncturing.

The first signal excludes a modulated symbol to be transmitted on a time-domain resource at a puncturing position, and/or no modulated symbol is transmitted on the time-domain resource at the puncturing position.

Alternatively, a modulated symbol to be transmitted on a time-domain resource at a puncturing position is postponed to be transmitted on a next time-domain resource that is not punctured.

Optionally, in Example 5, time-domain resource puncturing positions are different for different zero-power devices.

Specifically, when transmitting a signal, the zero-power device performs encoding using an encoding manner capable of error correction (i.e., the first encoding). Therefore, the zero-power device can actively give up transmission of some bits, so that the receiving end (i.e., the communication device) can still receive and process data correctly even if some modulated symbol(s)/data bit(s) are not transmitted or encounter errors during transmission. Thus, mutual interference between multiple zero-power devices in a scenario where the multiple zero-power devices perform data transmission simultaneously is reduced. Based on this characteristic, in Example 5, when transmitting the first signal, the zero-power device may perform puncturing processing on time-domain resources in time-frequency resources corresponding to the first signal, where time-domain resource puncturing positions are different for different zero-power devices, so that mutual interference between signals when different zero-power devices use the same time-domain resources for data transmission can be reduced, the probability of successful data reception by the multiple zero-power devices can be improved, and the influence of data collision on signal transmission can be reduced.

Specifically, in Example 5, a time-domain resource at a puncturing position may be processed in one of manner 1 and manner 2 as follows.

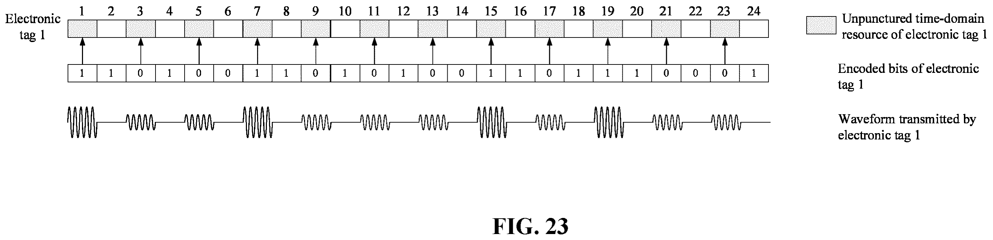

Manner 1: encoded bits and modulated symbols are affected synchronously. Specifically, as illustrated in FIG. 23, no data transmission is performed on punctured time-domain resources, that is, symbols originally to be transmitted on these time-domain resources are not transmitted, and there is no need to postpone transmission of the symbols; or data transmission is performed only on unpunctured time-domain resources.

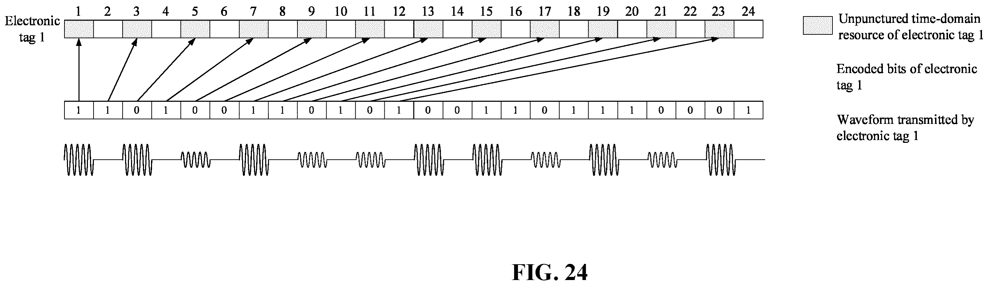

Manner 2: Data rearrangement/postponed transmission of data. Specifically, no data transmission is performed on punctured time-domain resources, or data transmission is performed only on unpunctured time domain resources. Since this processing manner causes that the symbols originally to be transmitted on the time-domain resources are not actually transmitted, time-domain resources on which actual transmission is performed may also be referred to as available time-domain resources or actual transmission time-domain resources. A symbol not transmitted on a time-domain resource 1 is postponed to be transmitted on a next available time-domain resource, as illustrated in FIG. 24.

Optionally, in Example 5, time-domain resource puncturing position(s) corresponding to the first signal are determined based on a time-domain resource pattern corresponding to the first signal. Optionally, the time-domain resource pattern is a sequence composed of third value(s) and fourth value(s). The third value represents puncturing and the fourth value represents no puncturing. For example, the third value is 0 and the fourth value is 1. Alternatively, the third value is 1 and the fourth value is 0. Alternatively, the third value and the fourth value are other values, which is not limited in this embodiment.

Optionally, in Example 5, each value in the time-domain resource pattern is associated with K time-domain resources, where K is a positive integer.

Specifically, for example, in a case of K = 1, the time-domain resource pattern is periodically applied to time-domain resource processing; or in a case of K > 1 and the K time-domain resources are consecutive, the time-domain resource pattern is periodically applied to time-domain resource processing.

Specifically, in Example 5, the zero-power device first determines time-domain resources for data transmission, and then performs puncturing processing on finer-grained time-domain resources of the time-domain resources based on the time-domain resource pattern, to obtain time-domain resource(s) for actual transmission. For example, multiple slots are allocated for data transmission, and puncturing of the zero-power device may be performed based on finer-grained time-domain resources, such as based on orthogonal frequency-division multiplexing (OFDM) symbols.

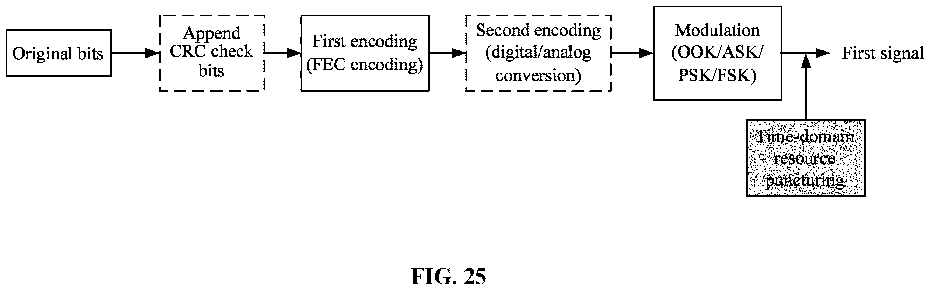

Optionally, in Example 5, the transmission procedure of the first signal with time-domain resource puncturing may be as illustrated in FIG. 25. It is to be noted that "append CRC check bits" and "second encoding" in FIG. 25 correspond to dotted boxes, indicating optional operations.

In some embodiments, as Example 6, time-domain resources in time-frequency resources corresponding to the first signal have been subjected to selection.

The first signal excludes a modulated symbol to be transmitted on a time-domain resource unselected, and/or no modulated symbol is transmitted on the time-domain resource unselected.

Alternatively, a modulated symbol to be transmitted on a time-domain resource unselected is postponed to be transmitted on a next time-domain resource that is selected.

Optionally, in Example 6, time-domain resources selected by different zero-power devices are different.

Specifically, when transmitting a signal, the zero-power device performs encoding using an encoding manner capable of error correction (i.e., the first encoding). Therefore, the zero-power device can actively give up transmission of some bits, so that the receiving end (i.e., the communication device) can still receive and process data correctly even if some modulated symbol(s)/data bit(s) are not transmitted or encounter errors during transmission. Thus, mutual interference between multiple zero-power devices in a scenario where the multiple zero-power devices perform data transmission simultaneously is reduced. Based on this characteristic, in Example 6, when transmitting the first signal, the zero-power device may perform selection processing on time-domain resources in time-frequency resources corresponding to the first signal, where time-domain resources selected by different zero-power devices are different, so that mutual interference between signals when different zero-power devices use the same time-domain resources for data transmission can be reduced, the probability of successful data reception by the multiple zero-power devices can be improved, and the influence of data collision on signal transmission can be reduced.

Specifically, in Example 6, an unselected time-domain resource may be processed in one of manner 3 and manner 4 as follows.

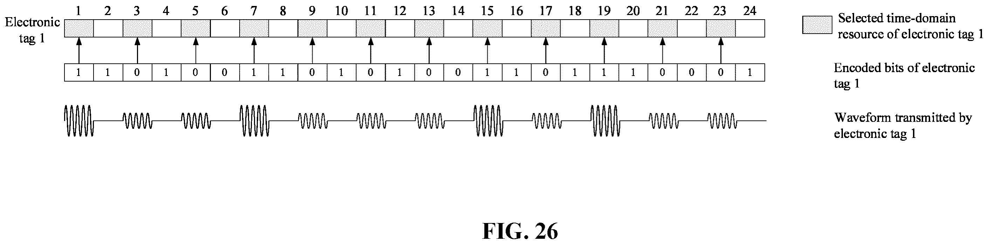

Manner 3: encoded bits and modulated symbols are affected synchronously. Specifically, as illustrated in FIG. 26, no data transmission is performed on unselected time-domain resources, that is, symbols originally to be transmitted on these time-domain resources are not transmitted, and there is no need to postpone transmission of the symbols; or data transmission is performed only on selected time-domain resources.

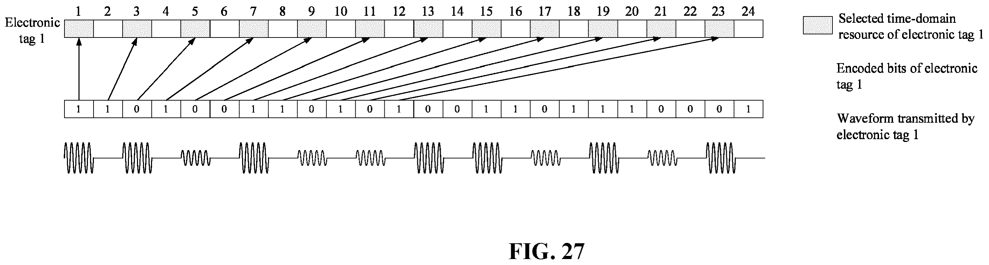

Manner 4: Data rearrangement/postponed transmission of data. Specifically, no data transmission is performed on unselected time-domain resources, or data transmission is performed only on selected time domain resources. Since this processing manner causes that the symbols originally to be transmitted on the time-domain resources are not actually transmitted, time-domain resources on which actual transmission is performed may also be referred to as available time-domain resources or actual transmission time-domain resources. A symbol not transmitted on a time-domain resource 1 is postponed to be transmitted on a next available time-domain resource, as illustrated in FIG. 27.

Optionally, in Example 6, modulated symbols in the first signal are selected based on a time-domain resource pattern corresponding to the first signal. Optionally, the time-domain resource pattern is a sequence composed of third value(s) and fourth value(s). The third value represents non-selection and the fourth value represents selection. For example, the third value is 0 and the fourth value is 1. Alternatively, the third value is 1 and the fourth value is 0. Alternatively, the third value and the fourth value are other values, which is not limited in this embodiment.

Optionally, in Example 5, each value in the time-domain resource pattern is associated with K time-domain resources, where K is a positive integer.

Specifically, for example, in a case of K = 1, the time-domain resource pattern is periodically applied to time-domain resource processing; or in a case of K > 1 and the K time-domain resources are consecutive, the time-domain resource pattern is periodically applied to time-domain resource processing.

Specifically, in Example 6, the zero-power device first determines time-domain resources for data transmission, and then performs selection processing on finer-grained time-domain resources of the time-domain resources based on the time-domain resource pattern, to obtain time-domain resource(s) for actual transmission. For example, multiple slots are allocated for data transmission, and selection of the zero-power device may be performed based on finer-grained time-domain resources, such as based on OFDM symbols.

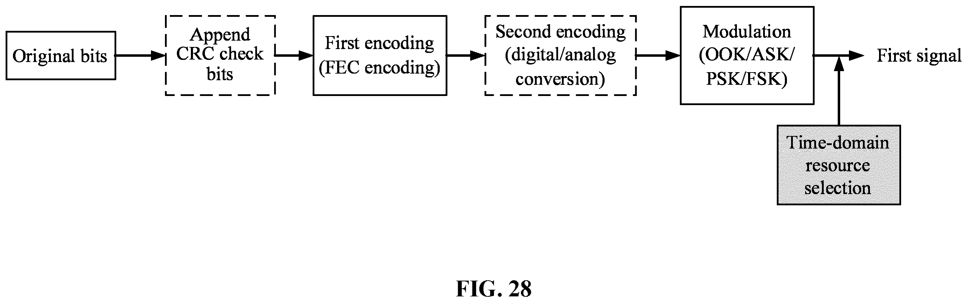

Optionally, in Example 6, the transmission procedure of the first signal with time-domain resource selection may be as illustrated in FIG. 28. It is to be noted that "append CRC check bits" and "second encoding" in FIG. 28 correspond to dotted boxes, indicating optional operations.

In some embodiments, in Examples 5 and 6 above, a number or proportion of the third values or the fourth values in the time-domain resource pattern does not exceed a second threshold. Optionally, the second threshold is determined based on at least one of: a data transmission code rate, a transport block size (TBS), or a data encoding manner.

In some embodiments, in Examples 5 and 6 above, granularity of the time-domain resources is one of: a slot or a symbol.

In some embodiments, in Examples 5 and 6 above, the time-domain resources are a time-domain resource of a single modulated symbol * R, where R is a positive integer.

In some embodiments, in Examples 5 and 6 above, the time-frequency resources corresponding to the first signal are indicated by a network device through scheduling, or the time-frequency resources corresponding to the first signal are predefined by a protocol, or the time-frequency resources corresponding to the first signal are obtained by applying a frequency-domain offset to time-frequency resources occupied by an incoming signal corresponding to the first signal.

In some embodiments, in Examples 5 and 6 above, before the zero-power device transmits the first signal, the zero-power device transmits a second sequence. The second sequence includes at least one of: part or all of identity information of the zero-power device, data control information corresponding to the first signal, or indication information of a time-domain resource pattern corresponding to the first signal.

In some embodiments, CRC check bits in the first signal are scrambled based on part or all of the information in the second sequence.

In some embodiments, the second sequence is a preamble sequence used in an access procedure, or the second sequence is a sequence carrying relevant information of the zero-power device.

In some embodiments, the time-domain resource pattern is determined based on at least one of: scheduling information, data control information, an identifier of the zero-power device, an identifier of a group to which the zero-power device belongs, a cell identifier, or a pre-transmitted sequence.

In some embodiments, the time-domain resource pattern is obtained by expanding an initial time-domain resource pattern based on at least one of: a data transmission code rate, a transport block size (TBS), or a data encoding manner.

In some embodiments, the initial time-domain resource pattern is predefined by a protocol, or the initial time-domain resource pattern is configured by a network.

In some embodiments, the time-domain resource pattern is configured or indicated by a network device; or the time-domain resource pattern is generated based on a parameter configured or indicated by a network device; or the time-domain resource pattern is generated by the zero-power device based on at least one of: an identifier of the zero-power device, an identifier of a group to which the zero-power device belongs, or a cell identifier; or the time-domain resource pattern is a target time-domain resource pattern among multiple preset time-domain resource patterns; or the time-domain resource pattern is a target time-domain resource pattern in a target time-domain resource pattern set among multiple preset time-domain resource pattern sets; or the time-domain resource pattern is determined based on a second sequence associated with the time-domain resource pattern.

In some embodiments, in a case that the time-domain resource pattern is the target time-domain resource pattern among the multiple preset time-domain resource patterns, the target time-domain resource pattern is indicated by a network device, or the target time-domain resource pattern is determined by the zero-power device based on at least one of: an identifier of the zero-power device, an identifier of a group to which the zero-power device belongs, or a cell identifier.

In some embodiments, in a case that the time-domain resource pattern is the target time-domain resource pattern in the target time-domain resource pattern set among the multiple preset time-domain resource pattern sets, the target time-domain resource pattern set is indicated by a network device, and the target time-domain resource pattern is selected by the zero-power device randomly or the target time-domain resource pattern is determined by the zero-power device based on at least one of: an identifier of the zero-power device, an identifier of a group to which the zero-power device belongs, or a cell identifier.

In some embodiments, in a case that the time-domain resource pattern is determined based on the second sequence associated with the time-domain resource pattern, an association relation between the time-domain resource pattern and the second sequence is predefined by a protocol, or is configured or indicated by a network device.

Therefore, in the embodiments of the disclosure, the first signal transmitted by the zero-power device has been subjected to at least the first encoding, and the receiving end can correct the error occurring to the first signal during transmission of the first signal based on the first encoding, thereby improving data transmission performance of the zero-power device. Further, puncturing or selective transmission can be performed on part of bits/symbols/time-domain resources, thereby reducing mutual interference between multiple zero-power devices in simultaneously transmitting data, and improving data transmission performance in a multi-user scenario.

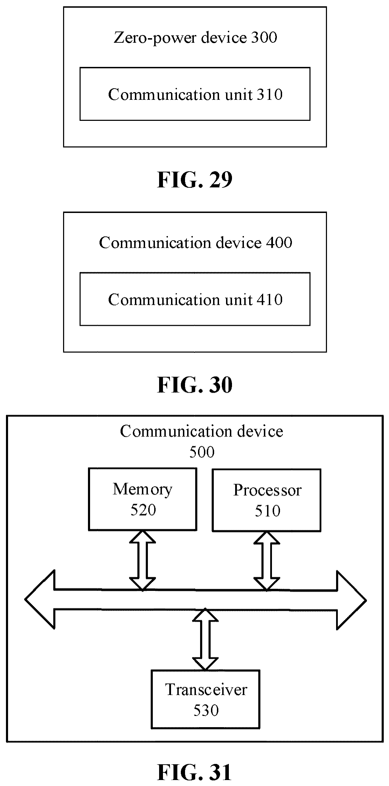

The method embodiments of the disclosure have been described in detail above in conjunction with FIG. 15 to FIG. 28. The device embodiments of the disclosure are described in detail in conjunction with FIG. 29 to FIG. 33 hereinafter. It is to be understood that the device embodiments and the method embodiments correspond to each other, and reference may be made to the method embodiments for similar descriptions.

FIG. 29 illustrates a schematic block diagram of a zero-power device 300 according to embodiments of the disclosure. As illustrated in FIG. 29, the zero-power device 300 includes a communication unit 310.

The communication unit 310 is configured to transmit a first signal.

The first signal has been subjected to at least one encoding. The at least one encoding includes a first encoding, and the first encoding is used for a receiving end to correct an error occurring in the first signal during transmission of the first signal.

In some embodiments, the first signal includes a redundant error-correcting code with error correction capability.

In some embodiments, the redundant error-correcting code includes at least one of: a block code, a convolutional code, a concatenated code, a Turbo-like code, a cyclic redundancy check (CRC) code, or a repetition code.

In some embodiments, the redundant error-correcting code includes at least the CRC code in a case that a bit length of the first signal before being subjected to the first encoding is less than or equal to N, where N is a positive integer.

In some embodiments, a value of N is a length of CRC check bits in the first signal; or a value of N is M*L, where M is a length of CRC check bits in the first signal, and L is a scaling factor.

The CRC check bits are used for the receiving end to determine whether the first signal is successfully received.

In some embodiments, the first encoding is forward error correction (FEC) encoding.

In some embodiments, a modulation manner for the first signal is at least one of: amplitude shift keying (ASK) modulation, on-off keying (OOK) modulation, frequency shift keying (FSK) modulation, or phase shift keying (PSK) modulation.

In some embodiments, the at least one encoding includes a second encoding. The second encoding is performed after the first encoding, and is used for implementing digital-to-analog conversion.

In some embodiments, the second encoding is at least one of: non-return-to-zero encoding, unipolar return-to-zero encoding, Manchester encoding, Miller encoding, differential biphase encoding, differential encoding, pulse interval encoding, or biphase space encoding.

In some embodiments, a modulation manner for the first signal is at least one of: amplitude shift keying (ASK) modulation, or on-off keying (OOK) modulation.

In some embodiments, the first signal includes CRC check bits. The CRC check bits are used for the receiving end to determine whether the first signal is successfully received.

In some embodiments, data bits carried in the first signal before modulation have been subjected to interleaving.

In some embodiments, interleaving manners are different for different zero-power devices, or interleaving manners are identical for different zero-power devices.

In some embodiments, in a case that the interleaving manners are different for different zero-power devices, an interleaving manner used by the zero-power device is determined based on at least one of: an identifier of the zero-power device, an identifier of a group to which the zero-power device belongs, or a data transmission pattern corresponding to the first signal.

In some embodiments, data bits carried in the first signal before modulation have been subjected to puncturing.

The first signal excludes a modulated symbol corresponding to a data bit at a puncturing position, and/or no modulated symbol is transmitted on a time-domain resource and/or a frequency-domain resource of the modulated symbol corresponding to the data bit at the puncturing position.

Alternatively, a data bit at a puncturing position in the first signal is fixed to be a first target value, or a modulated symbol corresponding to a data bit at a puncturing position in the first signal is fixed to be a first target value, or no modulation is performed on a data bit at a puncturing position in the first signal.

In some embodiments, data bit puncturing positions are different for different zero-power devices.

In some embodiments, data bit puncturing position(s) corresponding to the first signal are determined based on a data transmission pattern corresponding to the first signal.

In some embodiments, the data transmission pattern is a sequence composed of first value(s) and second value(s). The first value represents puncturing and the second value represents no puncturing.

In some embodiments, data bits carried in the first signal before modulation have been subjected to selection.

The first signal excludes a modulated symbol corresponding to a data bit unselected, and/or no modulated symbol is transmitted on a time-domain resource and/or a frequency-domain resource of the modulated symbol corresponding to the data bit unselected.

Alternatively, a data bit unselected in the first signal is fixed to be a first target value, or a modulated symbol corresponding to a data bit unselected in the first signal is fixed to be a first target value, or no modulation is performed on a data bit unselected in the first signal.

In some embodiments, data bits selected by different zero-power devices are different.

In some embodiments, the data bits carried in the first signal before modulation are selected based on a data transmission pattern corresponding to the first signal.

In some embodiments, the data transmission pattern is a sequence composed of first value(s) and second value(s). The first value represents non-selection and the second value represents selection.

In some embodiments, each value in the data transmission pattern is associated with S data bits, where S is a positive integer.

In some embodiments, in a case of S = 1, the data transmission pattern is periodically applied to data bit processing; or in a case of S > 1 and that the S data bits are consecutive, the data transmission pattern is periodically applied to data bit processing.

In some embodiments, modulated symbols carried in the first signal have been subjected to puncturing.

The first signal excludes a modulated symbol at a puncturing position, and/or no modulated symbol is transmitted on a time-domain resource and/or a frequency-domain resource of the modulated symbol at the puncturing position.

Alternatively, a modulated symbol at a puncturing position in the first signal is fixed to be a second target value.

In some embodiments, modulated symbol puncturing positions are different for different zero-power devices.

In some embodiments, modulated symbol puncturing position(s) corresponding to the first signal are determined based on a data transmission pattern corresponding to the first signal.

In some embodiments, the data transmission pattern is a sequence composed of first value(s) and second value(s). The first value represents puncturing and the second value represents no puncturing.

In some embodiments, modulated symbols carried in the first signal have been subjected to selection.

The first signal excludes a modulated symbol unselected, and/or no modulated symbol is transmitted on a time-domain resource and/or a frequency-domain resource of the modulated symbol unselected.

Alternatively, a modulated symbol unselected in the first signal is fixed to be a second target value.

In some embodiments, modulated symbols selected by different zero-power devices are different.

In some embodiments, the modulated symbols in the first signal are selected based on a data transmission pattern corresponding to the first signal.

In some embodiments, the data transmission pattern is a sequence composed of first value(s) and second value(s). The first value represents non-selection and the second value represents selection.

In some embodiments, each value in the data transmission pattern is associated with W modulated symbols, where W is a positive integer.

In some embodiments, in a case of W = 1, the data transmission pattern is periodically applied to modulated symbol processing; or in a case of W > 1 and that the W modulated symbols are consecutive, the data transmission pattern is periodically applied to modulated symbol processing.

In some embodiments, a number or proportion of the first values or the second values in the data transmission pattern does not exceed a first threshold.

In some embodiments, the first threshold is determined based on at least one of: a data transmission code rate, a transport block size (TBS), or a data encoding manner.

In some embodiments, before the zero-power device transmits the first signal, the communication unit 310 is further configured to transmit a first sequence.

The first sequence includes at least one of: part or all of identity information of the zero-power device, data control information corresponding to the first signal, or indication information of a data transmission pattern corresponding to the first signal.

In some embodiments, CRC check bits in the first signal are scrambled based on part or all of the information in the first sequence.

In some embodiments, the first sequence is a preamble sequence used in an access procedure, or the first sequence is a sequence carrying relevant information of the zero-power device.

In some embodiments, the data transmission pattern is determined based on at least one of: scheduling information, data control information, an identifier of the zero-power device, an identifier of a group to which the zero-power device belongs, a cell identifier, or a pre-transmitted sequence.

In some embodiments, the data transmission pattern is obtained by expanding an initial data transmission pattern based on at least one of: a data transmission code rate, a transport block size (TBS), or a data encoding manner.

In some embodiments, the initial data transmission pattern is predefined by a protocol, or the initial data transmission pattern is configured by a network.

In some embodiments, the data transmission pattern is configured or indicated by a network device; or the data transmission pattern is generated based on a parameter configured or indicated by a network device; or the data transmission pattern is generated by the zero-power device based on at least one of: an identifier of the zero-power device, an identifier of a group to which the zero-power device belongs, or a cell identifier; or the data transmission pattern is a target data transmission pattern among multiple preset data transmission patterns; or the data transmission pattern is a target data transmission pattern in a target data transmission pattern set among multiple preset data transmission pattern sets; or the data transmission pattern is determined based on a first sequence associated with the data transmission pattern.

In some embodiments, in a case that the data transmission pattern is the target data transmission pattern among the multiple preset data transmission patterns, the target data transmission pattern is indicated by a network device, or the target data transmission pattern is determined by the zero-power device based on at least one of: an identifier of the zero-power device, an identifier of a group to which the zero-power device belongs, or a cell identifier.

In a case that the data transmission pattern is the target data transmission pattern in the target data transmission pattern set among the multiple preset data transmission pattern sets, the target data transmission pattern set is indicated by the network device, and the target data transmission pattern is selected by the zero-power device randomly or the target data transmission pattern is determined by the zero-power device based on at least one of: the identifier of the zero-power device, the identifier of the group to which the zero-power device belongs, or the cell identifier.

In some embodiments, in a case that the data transmission pattern is determined based on the first sequence associated with the data transmission pattern, an association relation between the data transmission pattern and the first sequence is predefined by a protocol, or is configured or indicated by a network device.

In some embodiments, time-domain resources in time-frequency resources corresponding to the first signal have been subjected to puncturing.

The first signal excludes a modulated symbol to be transmitted on a time-domain resource at a puncturing position, and/or no modulated symbol is transmitted on the time-domain resource at the puncturing position.

Alternatively, a modulated symbol to be transmitted on a time-domain resource at a puncturing position is postponed to be transmitted on a next time-domain resource that is not punctured.

In some embodiments, time-domain resource puncturing positions are different for different zero-power devices.

In some embodiments, time-domain resource puncturing position(s) corresponding to the first signal are determined based on a time-domain resource pattern corresponding to the first signal.

In some embodiments, the time-domain resource pattern is a sequence composed of third value(s) and fourth value(s). The third value represents puncturing and the fourth value represents no puncturing.

In some embodiments, time-domain resources in time-frequency resources corresponding to the first signal have been subjected to selection.

The first signal excludes a modulated symbol to be transmitted on a time-domain resource unselected, and/or no modulated symbol is transmitted on the time-domain resource unselected.

Alternatively, a modulated symbol to be transmitted on a time-domain resource unselected is postponed to be transmitted on a next time-domain resource that is selected.

In some embodiments, time-domain resources selected by different zero-power devices are different.

In some embodiments, modulated symbols in the first signal are selected based on a time-domain resource pattern corresponding to the first signal.

In some embodiments, the time-domain resource pattern is a sequence composed of third value(s) and fourth value(s). The third value represents non-selection and the fourth value represents selection.

In some embodiments, each value in the time-domain resource pattern is associated with K time-domain resources, where K is a positive integer.

In some embodiments, in a case of K = 1, the time-domain resource pattern is periodically applied to time-domain resource processing; or in a case of K > 1 and the K time-domain resources are consecutive, the time-domain resource pattern is periodically applied to time-domain resource processing.

In some embodiments, a number or proportion of the third values or the fourth values in the time-domain resource pattern does not exceed a second threshold.

In some embodiments, the second threshold is determined based on at least one of: a data transmission code rate, a transport block size (TBS), or a data encoding manner.

In some embodiments, granularity of the time-domain resources is one of: a slot or a symbol.

In some embodiments, the time-domain resources are a time-domain resource of a single modulated symbol * R, where R is a positive integer.

In some embodiments, the time-frequency resources corresponding to the first signal are indicated by a network device through scheduling, or the time-frequency resources corresponding to the first signal are predefined by a protocol, or the time-frequency resources corresponding to the first signal are obtained by applying a frequency-domain offset to time-frequency resources occupied by an incoming signal corresponding to the first signal.

In some embodiments, before the zero-power device transmits the first signal, the communication unit 310 is further configured to transmit a second sequence.

The second sequence includes at least one of: part or all of identity information of the zero-power device, data control information corresponding to the first signal, or indication information of a time-domain resource pattern corresponding to the first signal.

In some embodiments, CRC check bits in the first signal are scrambled based on part or all of the information in the second sequence.

In some embodiments, the second sequence is a preamble sequence used in an access procedure, or the second sequence is a sequence carrying relevant information of the zero-power device.

In some embodiments, the time-domain resource pattern is determined based on at least one of: scheduling information, data control information, an identifier of the zero-power device, an identifier of a group to which the zero-power device belongs, a cell identifier, or a pre-transmitted sequence.

In some embodiments, the time-domain resource pattern is obtained by expanding an initial time-domain resource pattern based on at least one of: a data transmission code rate, a transport block size (TBS), or a data encoding manner.

In some embodiments, the initial time-domain resource pattern is predefined by a protocol, or the initial time-domain resource pattern is configured by a network.

In some embodiments, the time-domain resource pattern is configured or indicated by a network device; or the time-domain resource pattern is generated based on a parameter configured or indicated by a network device; or the time-domain resource pattern is generated by the zero-power device based on at least one of: an identifier of the zero-power device, an identifier of a group to which the zero-power device belongs, or a cell identifier; or the time-domain resource pattern is a target time-domain resource pattern among multiple preset time-domain resource patterns; or the time-domain resource pattern is a target time-domain resource pattern in a target time-domain resource pattern set among multiple preset time-domain resource pattern sets; or the time-domain resource pattern is determined based on a second sequence associated with the time-domain resource pattern.

In some embodiments, in a case that the time-domain resource pattern is the target time-domain resource pattern among the multiple preset time-domain resource patterns, the target time-domain resource pattern is indicated by a network device, or the target time-domain resource pattern is determined by the zero-power device based on at least one of: an identifier of the zero-power device, an identifier of a group to which the zero-power device belongs, or a cell identifier.

In a case that the time-domain resource pattern is the target time-domain resource pattern in the target time-domain resource pattern set among the multiple preset time-domain resource pattern sets, the target time-domain resource pattern set is indicated by the network device, and the target time-domain resource pattern is selected by the zero-power device randomly or the target time-domain resource pattern is determined by the zero-power device based on at least one of: the identifier of the zero-power device, the identifier of the group to which the zero-power device belongs, or the cell identifier.

In some embodiments, in a case that the time-domain resource pattern is determined based on the second sequence associated with the time-domain resource pattern, an association relation between the time-domain resource pattern and the second sequence is predefined by a protocol, or is configured or indicated by a network device.

In some embodiments, the first signal is a backscattered signal, or the first signal is a signal actively transmitted by the zero-power device.

In some embodiments, the above communication unit may be a communication interface or a transceiver, or an input/output interface of a communication chip or a system-on-chip. The above processing unit may be one or more processors.

It is to be understood that the zero-power device 300 according to the embodiments of the disclosure may correspond to the zero-power device in the method embodiments of the disclosure, and the above and other operations and/or functions of various units in the zero-power device 300 are intended to realize the corresponding procedures of the zero-power device in the method 200 in FIG. 15 respectively, which are not described herein again for brevity.

FIG. 30 illustrates a schematic block diagram of a communication device 400 according to embodiments of the disclosure. As illustrated in FIG. 30, the communication device 400 includes a communication unit 410.

The communication unit 410 is configured to receive a first signal from a zero-power device.

The first signal has been subjected to at least one encoding. The at least one encoding includes a first encoding, and the first encoding is used for the communication device to correct an error occurring in the first signal during transmission of the first signal.

In some embodiments, the first signal includes a redundant error-correcting code with error correction capability.

In some embodiments, the redundant error-correcting code includes at least one of: a block code, a convolutional code, a concatenated code, a Turbo-like code, a cyclic redundancy check (CRC) code, or a repetition code.

In some embodiments, the redundant error-correcting code includes at least the CRC code in a case that a bit length of the first signal before being subjected to the first encoding is less than or equal to N, where N is a positive integer.

In some embodiments, a value of N is a length of CRC check bits in the first signal; or a value of N is M*L, where M is a length of CRC check bits in the first signal, and L is a scaling factor.

The CRC check bits are used for the communication device to determine whether the first signal is successfully received.

In some embodiments, the first encoding is forward error correction (FEC) encoding.

In some embodiments, a modulation manner for the first signal is at least one of: amplitude shift keying (ASK) modulation, on-off keying (OOK) modulation, frequency shift keying (FSK) modulation, or phase shift keying (PSK) modulation.

In some embodiments, the at least one encoding includes a second encoding. The second encoding is performed after the first encoding, and is used for implementing digital-to-analog conversion.

In some embodiments, the second encoding is at least one of: non-return-to-zero encoding, unipolar return-to-zero encoding, Manchester encoding, Miller encoding, differential biphase encoding, differential encoding, pulse interval encoding, biphase space encoding.

In some embodiments, a modulation manner for the first signal is at least one of: amplitude shift keying (ASK) modulation, or on-off keying (OOK) modulation.

In some embodiments, the first signal includes CRC check bits. The CRC check bits are used for the communication device to determine whether the first signal is successfully received.

In some embodiments, data bits carried in the first signal before modulation have been subjected to interleaving.

In some embodiments, interleaving manners are different for different zero-power devices, or interleaving manners are identical for different zero-power devices.

In some embodiments, in a case that the interleaving manners are different for different zero-power devices, an interleaving manner used by the zero-power device is determined based on at least one of: an identifier of the zero-power device, an identifier of a group to which the zero-power device belongs, or a data transmission pattern corresponding to the first signal.

In some embodiments, data bits carried in the first signal before modulation have been subjected to puncturing.

The first signal excludes a modulated symbol corresponding to a data bit at a puncturing position, and/or no modulated symbol is transmitted on a time-domain resource and/or a frequency-domain resource of the modulated symbol corresponding to the data bit at the puncturing position.

Alternatively, a data bit at a puncturing position in the first signal is fixed to be a first target value, or a modulated symbol corresponding to a data bit at a puncturing position in the first signal is fixed to be a first target value, or no modulation is performed on a data bit at a puncturing position in the first signal.

In some embodiments, data bit puncturing positions are different for different zero-power devices.

In some embodiments, data bit puncturing position(s) corresponding to the first signal are determined based on a data transmission pattern corresponding to the first signal.

In some embodiments, the data transmission pattern is a sequence composed of first value(s) and second value(s). The first value represents puncturing and the second value represents no puncturing.

In some embodiments, data bits carried in the first signal before modulation have been subjected to selection.

The first signal excludes a modulated symbol corresponding to a data bit unselected, and/or no modulated symbol is transmitted on a time-domain resource and/or a frequency-domain resource of the modulated symbol corresponding to the data bit unselected.

Alternatively, a data bit unselected in the first signal is fixed to be a first target value, or a modulated symbol corresponding to a data bit unselected in the first signal is fixed to be a first target value, or no modulation is performed on a data bit unselected in the first signal.

In some embodiments, data bits selected by different zero-power devices are different.

In some embodiments, the data bits carried in the first signal before modulation are selected based on a data transmission pattern corresponding to the first signal.

In some embodiments, the data transmission pattern is a sequence composed of first value(s) and second value(s). The first value represents non-selection and the second value represents selection.

In some embodiments, each value in the data transmission pattern is associated with S data bits, where S is a positive integer.

In some embodiments, in a case of S = 1, the data transmission pattern is periodically applied to data bit processing; or in a case of S > 1 and that the S data bits are consecutive, the data transmission pattern is periodically applied to data bit processing.

In some embodiments, modulated symbols carried in the first signal have been subjected to puncturing.

The first signal excludes a modulated symbol at a puncturing position, and/or no modulated symbol is transmitted on a time-domain resource and/or a frequency-domain resource of the modulated symbol at the puncturing position.

Alternatively, a modulated symbol at a puncturing position in the first signal is fixed to be a second target value.

In some embodiments, modulated symbol puncturing positions are different for different zero-power devices.

In some embodiments, modulated symbol puncturing position(s) corresponding to the first signal are determined based on a data transmission pattern corresponding to the first signal.

In some embodiments, the data transmission pattern is a sequence composed of first value(s) and second value(s). The first value represents puncturing and the second value represents no puncturing.

In some embodiments, modulated symbols carried in the first signal have been subjected to selection.

The first signal excludes a modulated symbol unselected, and/or no modulated symbol is transmitted on a time-domain resource and/or a frequency-domain resource of the modulated symbol unselected.

Alternatively, a modulated symbol unselected in the first signal is fixed to be a second target value.

In some embodiments, modulated symbols selected by different zero-power devices are different.

In some embodiments, the modulated symbols in the first signal are selected based on a data transmission pattern corresponding to the first signal.

In some embodiments, the data transmission pattern is a sequence composed of first value(s) and second value(s). The first value represents non-selection and the second value represents selection.

In some embodiments, each value in the data transmission pattern is associated with W modulated symbols, where W is a positive integer.

In some embodiments, in a case of W = 1, the data transmission pattern is periodically applied to modulated symbol processing; or in a case of W > 1 and that the W modulated symbols are consecutive, the data transmission pattern is periodically applied to modulated symbol processing.

In some embodiments, a number or proportion of the first values or the second values in the data transmission pattern does not exceed a first threshold.

In some embodiments, the first threshold is determined based on at least one of: a data transmission code rate, a transport block size (TBS), or a data encoding manner.

In some embodiments, before the communication device receives the first signal, the communication unit 410 is further configured to receive a first sequence from the zero-power device.

The first sequence includes at least one of: part or all of identity information of the zero-power device, data control information corresponding to the first signal, or indication information of a data transmission pattern corresponding to the first signal.

In some embodiments, CRC check bits in the first signal are scrambled based on part or all of the information in the first sequence.

In some embodiments, the first sequence is a preamble sequence used in an access procedure, or the first sequence is a sequence carrying relevant information of the zero-power device.

In some embodiments, the data transmission pattern is determined based on at least one of: scheduling information, data control information, an identifier of the zero-power device, an identifier of a group to which the zero-power device belongs, a cell identifier, or a pre-transmitted sequence.

In some embodiments, the data transmission pattern is obtained by expanding an initial data transmission pattern based on at least one of: a data transmission code rate, a transport block size (TBS), or a data encoding manner.

In some embodiments, the initial data transmission pattern is predefined by a protocol, or the initial data transmission pattern is configured by a network.

In some embodiments, the data transmission pattern is configured or indicated by a network device; or the data transmission pattern is generated based on a parameter configured or indicated by a network device; or the data transmission pattern is generated by the zero-power device based on at least one of: an identifier of the zero-power device, an identifier of a group to which the zero-power device belongs, or a cell identifier; or the data transmission pattern is a target data transmission pattern among multiple preset data transmission patterns; or the data transmission pattern is a target data transmission pattern in a target data transmission pattern set among multiple preset data transmission pattern sets; or the data transmission pattern is determined based on a first sequence associated with the data transmission pattern.

In some embodiments, in a case that the data transmission pattern is the target data transmission pattern among the multiple preset data transmission patterns, the target data transmission pattern is indicated by a network device, or the target data transmission pattern is determined by the zero-power device based on at least one of: an identifier of the zero-power device, an identifier of a group to which the zero-power device belongs, or a cell identifier.

In a case that the data transmission pattern is the target data transmission pattern in the target data transmission pattern set among the multiple preset data transmission pattern sets, the target data transmission pattern set is indicated by the network device, and the target data transmission pattern is selected by the zero-power device randomly or the target data transmission pattern is determined by the zero-power device based on at least one of: the identifier of the zero-power device, the identifier of the group to which the zero-power device belongs, or the cell identifier.

In some embodiments, in a case that the data transmission pattern is determined based on the first sequence associated with the data transmission pattern, an association relation between the data transmission pattern and the first sequence is predefined by a protocol, or is configured or indicated by a network device.

In some embodiments, time-domain resources in time-frequency resources corresponding to the first signal have been subjected to puncturing.

The first signal excludes a modulated symbol to be transmitted on a time-domain resource at a puncturing position, and/or no modulated symbol is transmitted on the time-domain resource at the puncturing position.

Alternatively, a modulated symbol to be transmitted on a time-domain resource at a puncturing position is postponed to be transmitted on a next time-domain resource that is not punctured.

In some embodiments, time-domain resource puncturing positions are different for different zero-power devices.

In some embodiments, time-domain resource puncturing position(s) corresponding to the first signal are determined based on a time-domain resource pattern corresponding to the first signal.

In some embodiments, the time-domain resource pattern is a sequence composed of third value(s) and fourth value(s). The third value represents puncturing and the fourth value represents no puncturing.

In some embodiments, time-domain resources in time-frequency resources corresponding to the first signal have been subjected to selection.

The first signal excludes a modulated symbol to be transmitted on a time-domain resource unselected, and/or no modulated symbol is transmitted on the time-domain resource unselected.

Alternatively, a modulated symbol to be transmitted on a time-domain resource unselected is postponed to be transmitted on a next time-domain resource that is selected.

In some embodiments, time-domain resources selected by different zero-power devices are different.

In some embodiments, modulated symbols in the first signal are selected based on a time-domain resource pattern corresponding to the first signal.

In some embodiments, the time-domain resource pattern is a sequence composed of third value(s) and fourth value(s). The third value represents non-selection and the fourth value represents selection.

In some embodiments, each value in the time-domain resource pattern is associated with K time-domain resources, where K is a positive integer.

In some embodiments, in a case of K = 1, the time-domain resource pattern is periodically applied to time-domain resource processing; or in a case of K > 1 and the K time-domain resources are consecutive, the time-domain resource pattern is periodically applied to time-domain resource processing.

In some embodiments, a number or proportion of the third values or the fourth values in the time-domain resource pattern does not exceed a second threshold.

In some embodiments, the second threshold is determined based on at least one of: a data transmission code rate, a transport block size (TBS), or a data encoding manner.

In some embodiments, granularity of the time-domain resources is one of: a slot or a symbol.

In some embodiments, the time-domain resources are a time-domain resource of a single modulated symbol * R, where R is a positive integer.

In some embodiments, the time-frequency resources corresponding to the first signal are scheduled and indicated by a network device, or the time-frequency resources corresponding to the first signal are predefined by a protocol, or the time-frequency resources corresponding to the first signal are obtained by applying a frequency-domain offset to time-frequency resources occupied by an incoming signal corresponding to the first signal.

In some embodiments, before the communication device receives the first signal, the communication unit 410 is further configured to receive a second sequence from the zero-power device.

The second sequence includes at least one of: part or all of identity information of the zero-power device, data control information corresponding to the first signal, or indication information of a time-domain resource pattern corresponding to the first signal.

In some embodiments, CRC check bits in the first signal are scrambled based on part or all of the information in the second sequence.

In some embodiments, the second sequence is a preamble sequence used in an access procedure, or the second sequence is a sequence carrying relevant information of the zero-power device.

In some embodiments, the time-domain resource pattern is determined based on at least one of: scheduling information, data control information, an identifier of the zero-power device, an identifier of a group to which the zero-power device belongs, a cell identifier, or a pre-transmitted sequence.

In some embodiments, the time-domain resource pattern is obtained by expanding an initial time-domain resource pattern based on at least one of: a data transmission code rate, a transport block size (TBS), or a data encoding manner.

In some embodiments, the initial time-domain resource pattern is predefined by a protocol, or the initial time-domain resource pattern is configured by a network.

In some embodiments, the time-domain resource pattern is configured or indicated by a network device; or the time-domain resource pattern is generated based on a parameter configured or indicated by a network device; or the time-domain resource pattern is generated by the zero-power device based on at least one of: an identifier of the zero-power device, an identifier of a group to which the zero-power device belongs, or a cell identifier; or the time-domain resource pattern is a target time-domain resource pattern among multiple preset time-domain resource patterns; or the time-domain resource pattern is a target time-domain resource pattern in a target time-domain resource pattern set among multiple preset time-domain resource pattern sets; or the time-domain resource pattern is determined based on a second sequence associated with the time-domain resource pattern.

In some embodiments, in a case that the time-domain resource pattern is the target time-domain resource pattern among the multiple preset time-domain resource patterns, the target time-domain resource pattern is indicated by a network device, or the target time-domain resource pattern is determined by the zero-power device based on at least one of: an identifier of the zero-power device, an identifier of a group to which the zero-power device belongs, or a cell identifier.

In a case that the time-domain resource pattern is the target time-domain resource pattern in the target time-domain resource pattern set among the multiple preset time-domain resource pattern sets, the target time-domain resource pattern set is indicated by the network device, and the target time-domain resource pattern is selected by the zero-power device randomly or the target time-domain resource pattern is determined by the zero-power device based on at least one of: the identifier of the zero-power device, the identifier of the group to which the zero-power device belongs, or the cell identifier.

In some embodiments, in a case that the time-domain resource pattern is determined based on the second sequence associated with the time-domain resource pattern, an association relation between the time-domain resource pattern and the second sequence is predefined by a protocol, or is configured or indicated by a network device.

In some embodiments, the first signal is a backscattered signal, or the first signal is a signal actively transmitted by the zero-power device.

In some embodiments, the above communication unit may be a communication interface or a transceiver, or an input/output interface of a communication chip or a system-on-chip. The above processing unit may be one or more processors.

It is to be understood that the communication device 400 according to the embodiments of the disclosure may correspond to the communication device in the method embodiments of the disclosure, and the above and other operations and/or functions of various units in the communication device 400 are intended to realize the corresponding procedures of the communication device in the method 200 in FIG. 15 respectively, which are not described herein again for brevity.

FIG. 31 illustrates a schematic structural diagram of a communication device 500 according to embodiments of the disclosure. The communication device 500 as illustrated in FIG. 31 includes a processor 510. The processor 510 may call and run a computer program from a memory to implement the methods according to the embodiments of the disclosure.

In some embodiments, as illustrated in FIG. 31, the communication device 500 may further include a memory 520. The processor 510 may call and run a computer program from the memory 520 to implement the methods according to the embodiments of the disclosure.

The memory 520 may be a device independent from the processor 510, or may be integrated into the processor 510.

In some embodiments, as illustrated in FIG. 31, the communication device 500 may further include a transceiver 530. The processor 510 may control the transceiver 530 to communicate with other devices, in particular to transmit information or data to other devices or receive information or data from other devices.

The transceiver 530 may include a transmitter and a receiver. The transceiver 530 may further include an antenna, and there may be one or more antennas.

In some embodiments, the processor 510 may implement the functions of a processing unit in the zero-power device, or the processor 510 may implement the functions of a processing unit in the communication device 400, which will not be described herein for brevity.

In some embodiments, the transceiver 530 may implement the function of a communication unit in the zero-power device, which will not be described herein for brevity.

In some embodiments, the transceiver 530 may implement the function of a communication unit in the communication device 400, which will not be described herein for brevity.

In some embodiments, the communication device 500 may particularly be a communication device according to the embodiments of the disclosure, and the communication device 500 may implement corresponding procedures that are implemented by the communication device in various methods according to the embodiments of the disclosure, which is not described here again for brevity.

In some embodiments, the communication device 500 may particularly be a zero-power device according to the embodiments of the disclosure, and the communication device 500 may implement corresponding procedures that are implemented by the zero-power device in various methods according to the embodiments of the disclosure, which is not described here again for brevity.

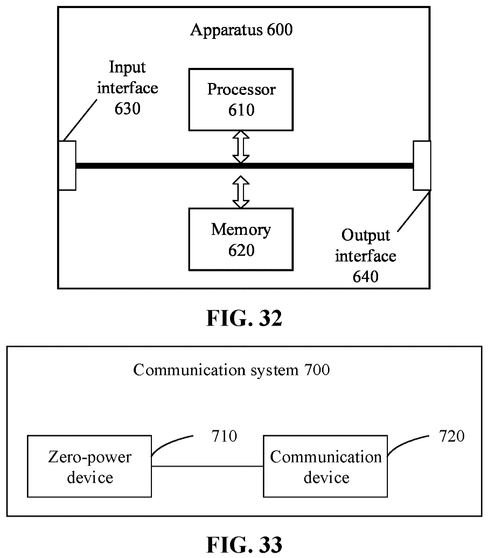

FIG. 32 illustrates a schematic structural diagram of an apparatus according to embodiments of the disclosure. The apparatus 600 as illustrated in FIG. 32 includes a processor 610. The processor 610 may call and run a computer program from a memory to implement the methods according to the embodiments of the disclosure.

In some embodiments, as illustrated in FIG. 32, the apparatus 600 may further include a memory 620. The processor 610 may call and run a computer program from the memory 620 to implement the methods according to the embodiments of the disclosure.

The memory 620 may be a device independent from the processor 610, or may be integrated into the processor 610.

In some embodiments, the processor 610 may implement the functions of a processing unit in the zero-power device, or the processor 610 may implement the functions of a processing unit in the communication device 400, which will not be described herein for brevity.

In some embodiments, the apparatus 600 may further include an input interface 630. The processor 610 may control the input interface 630 to communicate with other devices or chips, in particularly to acquire information or data from other devices or chips. Alternatively, the processor 610 may be located on or outside a chip.

In some embodiments, the input interface 630 may implement the functions of a communication unit in the zero-power device, or the input interface 630 may implement the functions of a communication unit in the communication device 400.

In some embodiments, the apparatus 600 may further include an output interface 640. The processor 610 may control the output interface 640 to communicate with other devices or chips, in particularly to output information or data to other devices or chips. Alternatively, the processor 610 may be located on or outside a chip.

In some embodiments, the output interface 640 may implement the functions of a communication unit in the zero-power device, or the output interface 640 may implement the functions of a communication unit in the communication device.

In some embodiments, the apparatus may be applied to the communication device according to the embodiments of the disclosure, and the apparatus may implement corresponding procedures that are implemented by the communication device in various methods according to the embodiments of the disclosure, which is not described here again for brevity.

In some embodiments, the apparatus may be applied to the zero-power device according to the embodiments of the disclosure, and the apparatus may implement corresponding procedures that are implemented by the zero-power device in various methods according to the embodiments of the disclosure, which is not described here again for brevity.

In some embodiments, the apparatus according to embodiments of the disclosure may also be a chip, for example, a system-level chip, a system chip, a chip system or a system-on-chip.

FIG. 33 illustrates a schematic block diagram of a communication system 700 according to embodiments of the disclosure. As illustrated in FIG. 33, the communication system 700 includes a zero-power device 710 and a communication device 720.

The zero-power device 710 may be used to implement corresponding functions implemented by the zero-power device in the above methods, and the communication device 720 may be used to implement corresponding functions implemented by the communication device in the above methods, which is not described here again for simplicity.

It should be understood that the processor of the embodiments of the disclosure may be an integrated circuit chip, and has the capability of signal processing. During implementation, the various operations of the above method embodiments may be completed by an integrated logic circuit in hardware form or instructions in software form in a processor. The above processor may be a general-purpose processor, a digital signal processor (DSP), an application specific integrated circuit (ASIC), a field programmable gate array (FPGA), or another programmable logical device, a discrete gate or a transistor logical device, or a discrete hardware component. The first processor may implement or perform the various methods, operations or logic blocks disclosed in the embodiments of the disclosure. The universal processor may be a microprocessor or the processor may also be any conventional processor and the like. The operations of the methods disclosed in combination with the embodiments of the disclosure may be directly embodied as being performed and completed by a hardware decoding processor, or being performed and completed by a combination of hardware and software modules in a decoding processor. The software module may be located in a mature storage medium in the art such as a random-access memory, a flash memory, a read-only memory, a programmable read-only memory, an electrically erasable programmable memory, or a register. The storage medium is in a memory, and a processor reads information from the memory to implement operations of the above methods in combination with the hardware.

It may be understood that the memory in the embodiments of the disclosure may be a volatile memory or a non-volatile memory, or may include both a volatile memory and a non-volatile memory. The non-volatile memory may be a read-only memory (ROM), a programmable ROM (PROM), an erasable PROM (RPROM), an electrically RPROM (EEPROM), or a flash memory. The volatile memory may be a random-access memory (RAM) that is used as an external cache. By way of example, but not limiting description, RAMs in many forms are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), and a directly rambus RAM (DR RAM). It should be noted that the memory in the systems and methods described herein is intended to include but not limited to memories of these and any other suitable types.

It should be understood that the memories are exemplary but not limiting description. For example, the memory in the embodiments of the disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), or a direct Rambus RAM (DR RAM) or the like. That is to say, the memory in the embodiments of the disclosure is intended to include but not limited to memories of these and any other suitable types.

Embodiments of the disclosure further provide a computer-readable storage medium for storing a computer program.

In some embodiments, the computer-readable storage medium may be applied to the communication device according to the embodiments of the disclosure, and the computer program enables the computer to implement corresponding procedures that are implemented by the communication device in various methods according to the embodiments of the disclosure, which is not described here again for brevity.

In some embodiments, the computer-readable storage medium may be applied to the zero-power device according to the embodiments of the disclosure, and the computer program enables the computer to implement corresponding procedures that are implemented by the zero-power device in various methods according to the embodiments of the disclosure, which is not described here again for brevity.

Embodiments of the disclosure further provide a computer program product including computer program instructions.

In some embodiments, the computer program product may be applied to the communication device according to the embodiments of the disclosure, and the computer program instructions enable a computer to implement corresponding procedures that are implemented by the communication device in various methods according to the embodiments of the disclosure, which is not described here again for simplicity.

In some embodiments, the computer program product may be applied to the zero-power device according to the embodiments of the disclosure, and the computer program instructions enable a computer to implement corresponding procedures that are implemented by the zero-power device in various methods according to the embodiments of the disclosure, which is not described here again for simplicity.

Embodiments of the disclosure further provide a computer program.

In some embodiments, the computer program may be applied to the communication device according to the embodiments of the disclosure, and the computer program, when running on a computer, enables the computer to implement corresponding procedures that are implemented by the communication device in various methods according to the embodiments of the disclosure, which is not described here again for simplicity.

In some embodiments, the computer program may be applied to the zero-power device according to the embodiments of the disclosure, and the computer program, when running on a computer, enables the computer to implement corresponding procedures that are implemented by the zero-power device in various methods according to the embodiments of the disclosure, which is not described here again for simplicity.

Those of ordinary skill in the art may realize that the units and algorithm operations of various examples described in combination with the embodiments disclosed herein may be implemented by electronic hardware, or a combination of computer software and electronic hardware. Whether the functions are performed in form of hardware or software form depends on the specific application and design constraint conditions of the technical solutions. Professionals may use a different method to realize the described function for each specific application, and such implementation should not be construed as extending beyond the scope of the disclosure

Those skilled in the art may clearly appreciate that for convenience and simplicity of description, the particular operation procedures of the system, apparatus and units described above may refer to corresponding procedures in the foregoing method embodiments, which will not be described herein again.

In some embodiments provided in the disclosure, it is to be understood that the disclosed system, apparatus and method may be implemented in other ways. For example, the apparatus embodiments described above are only exemplary, and for example, division of the units is only division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solutions of the embodiments according to actual requirements.

Additionally, various functional units in the embodiments of the disclosure may be integrated into one processing unit, or may exist separately physically; or two or more units may be integrated into one unit.

If implemented in form of software functional units and sold or used as independent product, the functions may be stored in a computer-readable storage medium. Based on such understanding, the technical solution of the disclosure substantially or in part making contributions to the related art or a part of the technical solution may be embodied in a software product. The computer software product is stored in a storage medium, and includes several instructions to enable a computer device (which may be a personal computer, a server, a network device or the like) to perform all or some operations of the methods according to various embodiments of the disclosure. The foregoing storage medium includes various media capable of storage program codes such as a USB flash drive, a mobile hard disk drive, a read-only memory (ROM), a random-access memory (RAM), a magnetic disc, or a compact disc (CD).

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be subject to the claimed scope of the claims.

## Claims

1. A method for wireless communication, comprising:
transmitting, by a zero-power device, a first signal;
wherein the first signal has been subjected to at least one encoding, the at least one encoding comprising a first encoding, the first encoding being used for a receiving end to correct an error that occurs to the first signal during transmission of the first signal.

2. The method of claim 1, wherein
the first signal comprises a redundant error-correcting code with error correction capability.

3. The method of claim 2, wherein the redundant error-correcting code comprises at least one of: a block code, a convolutional code, a concatenated code, a Turbo-like code, a cyclic redundancy check (CRC) code, or a repetition code.

4. The method of claim 3, wherein the redundant error-correcting code comprises at least the CRC code in a case that a bit length of the first signal before being subjected to the first encoding is less than or equal to N, N being a positive integer.

5. The method of claim 4, wherein
a value of N is a length of CRC check bits in the first signal; or
a value of N is M*L, where M is a length of CRC check bits in the first signal, and L is a scaling factor;
wherein the CRC check bits are used for the receiving end to determine whether the first signal is successfully received.

6. The method of any one of claims 1 to 5, wherein
the first encoding is forward error correction (FEC) encoding.

7. The method of any one of claims 1 to 6, wherein
a modulation manner for the first signal is at least one of: amplitude shift keying (ASK) modulation, on-off keying (OOK) modulation, frequency shift keying (FSK) modulation, or phase shift keying (PSK) modulation.

8. The method of any one of claims 1 to 6, wherein
the at least one encoding comprises a second encoding, wherein the second encoding is performed after the first encoding, and is used for implementing digital-to-analog conversion.

9. The method of claim 8, wherein
the second encoding is at least one of: non-return-to-zero encoding, unipolar return-to-zero encoding, Manchester encoding, Miller encoding, differential biphase encoding, differential encoding, pulse interval encoding, or biphase space encoding.

10. The method of claim 8 or 9, wherein
a modulation manner for the first signal is at least one of: amplitude shift keying (ASK) modulation or on-off keying (OOK) modulation.

11. The method of any one of claims 1 to 10, wherein the first signal comprises CRC check bits, the CRC check bits being used for the receiving end to determine whether the first signal is successfully received.

12. The method of any one of claims 1 to 11, wherein
data bits carried in the first signal before modulation have been subjected to interleaving.

13. The method of claim 12, wherein
interleaving manners are different for different zero-power devices, or interleaving manners are the same for different zero-power devices.

14. The method of claim 13, wherein in a case that the interleaving manners are different for different zero-power devices, an interleaving manner used by the zero-power device is determined based on at least one of: an identifier of the zero-power device, an identifier of a group to which the zero-power device belongs, or a data transmission pattern corresponding to the first signal.

15. The method of any one of claims 1 to 14, wherein data bits carried in the first signal before modulation have been subjected to puncturing; and
wherein the first signal excludes a modulated symbol corresponding to a data bit at a puncturing position, and/or no modulated symbol is transmitted on a time-domain resource and/or a frequency-domain resource of the modulated symbol corresponding to the data bit at the puncturing position; or
a data bit at a puncturing position in the first signal is fixed to be a first target value, or a modulated symbol corresponding to a data bit at a puncturing position in the first signal is fixed to be a first target value, or no modulation is performed on a data bit at a puncturing position in the first signal.

16. The method of claim 15, wherein data bit puncturing positions are different for different zero-power devices.

17. The method of claim 15 or 16, wherein
data bit puncturing position(s) corresponding to the first signal are determined based on a data transmission pattern corresponding to the first signal.

18. The method of claim 17, wherein the data transmission pattern is a sequence composed of first value(s) and second value(s), and wherein the first value represents puncturing and the second value represents no puncturing.

19. The method of any one of claims 1 to 14, wherein data bits carried in the first signal before modulation have been subjected to selection; and
wherein the first signal excludes a modulated symbol corresponding to an unselected data bit, and/or no modulated symbol is transmitted on a time-domain resource and/or a frequency-domain resource of the modulated symbol corresponding to the unselected data bit; or
an unselected data bit in the first signal is fixed to be a first target value, or a modulated symbol corresponding to an unselected data bit in the first signal is fixed to be a first target value, or no modulation is performed on an unselected data bit in the first signal.

20. The method of claim 19, wherein data bits selected by different zero-power devices are different.

21. The method of claim 19 or 20, wherein
the data bits carried in the first signal before modulation are selected based on a data transmission pattern corresponding to the first signal.

22. The method of claim 21, wherein the data transmission pattern is a sequence composed of first value(s) and second value(s), and wherein the first value represents non-selection and the second value represents selection.

23. The method of claim 18 or 22, wherein
each value in the data transmission pattern is associated with S data bits, S being a positive integer.

24. The method of claim 23, wherein
in a case of S = 1, the data transmission pattern is periodically applied to data bit processing; or
in a case of S > 1 and that the S data bits are consecutive, the data transmission pattern is periodically applied to data bit processing.

25. The method of any one of claims 1 to 14, wherein modulated symbols carried in the first signal have been subjected to puncturing; and
wherein the first signal excludes a modulated symbol at a puncturing position, and/or no modulated symbol is transmitted on a time-domain resource and/or a frequency-domain resource of the modulated symbol at the puncturing position; or
a modulated symbol at a puncturing position in the first signal is fixed to be a second target value.

26. The method of claim 25, wherein modulated symbol puncturing positions are different for different zero-power devices.

27. The method of claim 25 or 26, wherein
modulated symbol puncturing position(s) corresponding to the first signal are determined based on a data transmission pattern corresponding to the first signal.

28. The method of claim 27, wherein the data transmission pattern is a sequence composed of first value(s) and second value(s), and wherein the first value represents puncturing and the second value represents no puncturing.

29. The method of any one of claims 1 to 14, wherein modulated symbols carried in the first signal have been subjected to selection; and
wherein the first signal excludes an unselected modulated symbol, and/or no modulated symbol is transmitted on a time-domain resource and/or a frequency-domain resource of the unselected modulated symbol; or
an unselected modulated symbol in the first signal is fixed to be a second target value.

30. The method of claim 29, wherein modulated symbols selected by different zero-power devices are different.

31. The method of claim 29 or 30, wherein
the modulated symbols in the first signal are selected based on a data transmission pattern corresponding to the first signal.

32. The method of claim 31, wherein the data transmission pattern is a sequence composed of first value(s) and second value(s), and wherein the first value represents non-selection and the second value represents selection.

33. The method of claim 28 or 32, wherein
each value in the data transmission pattern is associated with W modulated symbols, W being a positive integer.

34. The method of claim 33, wherein
in a case of W = 1, the data transmission pattern is periodically applied to modulated symbol processing; or
in a case of W > 1 and that the W modulated symbols are consecutive, the data transmission pattern is periodically applied to modulated symbol processing.

35. The method of claim 18, 22, 23, 24, 28, 32, 33 or 34, wherein
a number or proportion of the first values or the second values in the data transmission pattern does not exceed a first threshold.

36. The method of claim 35, wherein
the first threshold is determined based on at least one of: a data transmission code rate, a transport block size (TBS), or a data encoding manner.

37. The method of any one of claims 1 to 36, further comprising: before transmitting, by the zero-power device, the first signal,
transmitting, by the zero-power device, a first sequence;
wherein the first sequence comprises at least one of: part or all of identity information of the zero-power device, data control information corresponding to the first signal, or indication information of a data transmission pattern corresponding to the first signal.

38. The method of claim 37, wherein
CRC check bits in the first signal are scrambled based on part or all of the information in the first sequence.

39. The method of claim 37 or 38, wherein the first sequence is a preamble sequence used in an access procedure, or the first sequence is a sequence carrying relevant information of the zero-power device.

40. The method of any one of claims 18, 22, 23, 24, 28, and 32 to 39, wherein
the data transmission pattern is determined based on at least one of: scheduling information, data control information, an identifier of the zero-power device, an identifier of a group to which the zero-power device belongs, a cell identifier, or a pre-transmitted sequence.

41. The method of any one of claims 18, 22, 23, 24, 28, and 32 to 39, wherein
the data transmission pattern is obtained by expanding an initial data transmission pattern based on at least one of:
a data transmission code rate, a transport block size (TBS), or a data encoding manner.

42. The method of claim 41, wherein
the initial data transmission pattern is predefined by a protocol, or the initial data transmission pattern is configured by a network.

43. The method of any one of claims 18, 22, 23, 24, 28, and 32 to 40, wherein
the data transmission pattern is configured or indicated by a network device; or
the data transmission pattern is generated based on a parameter configured or indicated by a network device; or
the data transmission pattern is generated by the zero-power device based on at least one of: an identifier of the zero-power device, an identifier of a group to which the zero-power device belongs, or a cell identifier; or
the data transmission pattern is a target data transmission pattern among a plurality of preset data transmission patterns; or
the data transmission pattern is a target data transmission pattern in a target data transmission pattern set among a plurality of preset data transmission pattern sets; or
the data transmission pattern is determined based on a first sequence associated with the data transmission pattern.

44. The method of claim 43, wherein
in a case that the data transmission pattern is the target data transmission pattern among the plurality of preset data transmission patterns, the target data transmission pattern is indicated by a network device, or the target data transmission pattern is determined by the zero-power device based on at least one of: an identifier of the zero-power device, an identifier of a group to which the zero-power device belongs, or a cell identifier;
in a case that the data transmission pattern is the target data transmission pattern in the target data transmission pattern set among the plurality of preset data transmission pattern sets, the target data transmission pattern set is indicated by the network device, and the target data transmission pattern is selected by the zero-power device randomly or the target data transmission pattern is determined by the zero-power device based on at least one of: the identifier of the zero-power device, the identifier of the group to which the zero-power device belongs, or the cell identifier.

45. The method of claim 43, wherein
in a case that the data transmission pattern is determined based on the first sequence associated with the data transmission pattern, an association relation between the data transmission pattern and the first sequence is predefined by a protocol, or is configured or indicated by a network device.

46. The method of any one of claims 1 to 14, wherein time-domain resources in time-frequency resources corresponding to the first signal have been subjected to puncturing; and
wherein the first signal excludes a modulated symbol to be transmitted on a time-domain resource at a puncturing position, and/or no modulated symbol is transmitted on the time-domain resource at the puncturing position; or
a modulated symbol to be transmitted on a time-domain resource at a puncturing position is postponed to be transmitted on a next time-domain resource that is not punctured.

47. The method of claim 46, wherein time-domain resource puncturing positions are different for different zero-power devices.

48. The method of claim 46 or 47, wherein:
time-domain resource puncturing position(s) corresponding to the first signal are determined based on a time-domain resource pattern corresponding to the first signal.

49. The method of claim 48, wherein the time-domain resource pattern is a sequence composed of third value(s) and fourth value(s), and wherein the third value represents puncturing and the fourth value represents no puncturing.

50. The method of any one of claims 1 to 14, wherein time-domain resources in time-frequency resources corresponding to the first signal have been subjected to selection; and
wherein the first signal excludes a modulated symbol to be transmitted on an unselected time-domain resource, and/or no modulated symbol is transmitted on the unselected time-domain resource; or
a modulated symbol to be transmitted on an unselected time-domain resource is postponed to be transmitted on a next time-domain resource that is selected.

51. The method of claim 50, wherein time-domain resources selected by different zero-power devices are different.

52. The method of claim 50 or 51, wherein
modulated symbols in the first signal are selected based on a time-domain resource pattern corresponding to the first signal.

53. The method of claim 52, wherein the time-domain resource pattern is a sequence composed of third value(s) and fourth value(s), and wherein the third value represents non-selection and the fourth value represents selection.

54. The method of claim 49 or 53, wherein
each value in the time-domain resource pattern is associated with K time-domain resources, K being a positive integer.

55. The method of claim 54, wherein
in a case of K = 1, the time-domain resource pattern is periodically applied to time-domain resource processing; or
in a case of K > 1 and the K time-domain resources are consecutive, the time-domain resource pattern is periodically applied to time-domain resource processing.

56. The method of claim 49, 53, 54 or 55, wherein
a number or proportion of the third values or the fourth values in the time-domain resource pattern does not exceed a second threshold.

57. The method of claim 56, wherein
the second threshold is determined based on at least one of: a data transmission code rate, a transport block size (TBS), or a data encoding manner.

58. The method of any one of claims 46 to 57, wherein
granularity of the time-domain resources is one of: a slot or a symbol.

59. The method of any one of claims 46 to 57, wherein
the time-domain resources are a time-domain resource of a single modulated symbol * R, wherein R is a positive integer.

60. The method of any one of claims 46 to 59, wherein
the time-frequency resources corresponding to the first signal are indicated by a network device through scheduling, or the time-frequency resources corresponding to the first signal are predefined by a protocol, or the time-frequency resources corresponding to the first signal are obtained by applying a frequency-domain offset to time-frequency resources occupied by an incoming signal corresponding to the first signal.

61. The method of any one of claims 1 to 14 and 46 to 60, further comprising: before transmitting, by the zero-power device, the first signal,
transmitting, by the zero-power device, a second sequence;
wherein the second sequence comprises at least one of: part or all of identity information of the zero-power device, data control information corresponding to the first signal, or indication information of a time-domain resource pattern corresponding to the first signal.

62. The method of claim 61, wherein
CRC check bits in the first signal are scrambled based on part or all of the information in the second sequence.

63. The method of claim 61 or 62, wherein the second sequence is a preamble sequence used in an access procedure, or the second sequence is a sequence carrying relevant information of the zero-power device.

64. The method of claim 48, 49, 52, 53, 54, 55, 56, 57, 61, 62 or 63, wherein
the time-domain resource pattern is determined based on at least one of: scheduling information, data control information, an identifier of the zero-power device, an identifier of a group to which the zero-power device belongs, a cell identifier, or a pre-transmitted sequence.

65. The method of claim 48, 49, 52, 53, 54, 55, 56, 57, 61, 62 or 63, wherein
the time-domain resource pattern is obtained by expanding an initial time-domain resource pattern based on at least one of:
a data transmission code rate, a transport block size (TBS), or a data encoding manner.

66. The method of claim 65, wherein
the initial time-domain resource pattern is predefined by a protocol, or the initial time-domain resource pattern is configured by a network.

67. The method of claim 48, 49, 52, 53, 54, 55, 56, 57, 61, 62, 63 or 64, wherein
the time-domain resource pattern is configured or indicated by a network device; or
the time-domain resource pattern is generated based on a parameter configured or indicated by a network device; or
the time-domain resource pattern is generated by the zero-power device based on at least one of: an identifier of the zero-power device, an identifier of a group to which the zero-power device belongs, or a cell identifier; or
the time-domain resource pattern is a target time-domain resource pattern among a plurality of preset time-domain resource patterns; or
the time-domain resource pattern is a target time-domain resource pattern in a target time-domain resource pattern set among a plurality of preset time-domain resource pattern sets; or
the time-domain resource pattern is determined based on a second sequence associated with the time-domain resource pattern.

68. The method of claim 67, wherein
in a case that the time-domain resource pattern is the target time-domain resource pattern among the plurality of preset time-domain resource patterns, the target time-domain resource pattern is indicated by a network device, or the target time-domain resource pattern is determined by the zero-power device based on at least one of: an identifier of the zero-power device, an identifier of a group to which the zero-power device belongs, or a cell identifier;
in a case that the time-domain resource pattern is the target time-domain resource pattern in the target time-domain resource pattern set among the plurality of preset time-domain resource pattern sets, the target time-domain resource pattern set is indicated by the network device, and the target time-domain resource pattern is selected by the zero-power device randomly or the target time-domain resource pattern is determined by the zero-power device based on at least one of: the identifier of the zero-power device, the identifier of the group to which the zero-power device belongs, or the cell identifier.

69. The method of claim 67, wherein
in a case that the time-domain resource pattern is determined based on the second sequence associated with the time-domain resource pattern, an association relation between the time-domain resource pattern and the second sequence is predefined by a protocol, or is configured or indicated by a network device.

70. The method of any one of claims 1 to 69, wherein
the first signal is a backscattered signal, or the first signal is a signal actively transmitted by the zero-power device.

71. A method for wireless communication, comprising:
receiving, by a communication device, a first signal from a zero-power device;
wherein the first signal has been subjected to at least one encoding, the at least one encoding comprising a first encoding, and the first encoding being used for the communication device to correct an error that occurs to the first signal during transmission of the first signal.

72. The method of claim 71, wherein
the first signal comprises a redundant error-correcting code with error correction capability.

73. The method of claim 72, wherein the redundant error-correcting code comprises at least one of: a block code, a convolutional code, a concatenated code, a Turbo-like code, a cyclic redundancy check (CRC) code, or a repetition code.

74. The method of claim 73, wherein the redundant error-correcting code comprises at least the CRC code in a case that a bit length of the first signal before being subjected to the first encoding is less than or equal to N, N being a positive integer.

75. The method of claim 74, wherein
a value of N is a length of CRC check bits in the first signal; or
a value of N is M*L, where M is a length of CRC check bits in the first signal, and L is a scaling factor;
wherein the CRC check bits are used for the communication device to determine whether the first signal is successfully received.

76. The method of any one of claims 71 to 75, wherein
the first encoding is forward error correction (FEC) encoding.

77. The method of any one of claims 71 to 76, wherein
a modulation manner for the first signal is at least one of: amplitude shift keying (ASK) modulation, on-off keying (OOK) modulation, frequency shift keying (FSK) modulation, or phase shift keying (PSK) modulation.

78. The method of any one of claims 71 to 76, wherein
the at least one encoding comprises a second encoding, wherein the second encoding is performed after the first encoding, and is used for implementing digital-to-analog conversion.

79. The method of claim 78, wherein
the second encoding is at least one of: non-return-to-zero encoding, unipolar return-to-zero encoding, Manchester encoding, Miller encoding, differential biphase encoding, differential encoding, pulse interval encoding, or biphase space encoding.

80. The method of claim 78 or 79, wherein
a modulation manner for the first signal is at least one of: amplitude shift keying (ASK) modulation or on-off keying (OOK) modulation.

81. The method of any one of claims 71 to 80, wherein the first signal comprises CRC check bits, the CRC check bits being used for the communication device to determine whether the first signal is successfully received.

82. The method of any one of claims 71 to 81, wherein
data bits carried in the first signal before modulation have been subjected to interleaving.

83. The method of claim 82, wherein
interleaving manners are different for different zero-power devices, or interleaving manners are the same for different zero-power devices.

84. The method of claim 83, wherein in a case that the interleaving manners are different for different zero-power devices, an interleaving manner used by the zero-power device is determined based on at least one of: an identifier of the zero-power device, an identifier of a group to which the zero-power device belongs, or a data transmission pattern corresponding to the first signal.

85. The method of any one of claims 71 to 84, wherein data bits carried in the first signal before modulation have been subjected to puncturing; and
wherein the first signal excludes a modulated symbol corresponding to a data bit at a puncturing position, and/or no modulated symbol is transmitted on a time-domain resource and/or a frequency-domain resource of the modulated symbol corresponding to the data bit at the puncturing position; or
a data bit at a puncturing position in the first signal is fixed to be a first target value, or a modulated symbol corresponding to a data bit at a puncturing position in the first signal is fixed to be a first target value, or no modulation is performed on a data bit at a puncturing position in the first signal.

86. The method of claim 85, wherein data bit puncturing positions are different for different zero-power devices.

87. The method of claim 85 or 86, wherein
data bit puncturing position(s) corresponding to the first signal are determined based on a data transmission pattern corresponding to the first signal.

88. The method of claim 87, wherein the data transmission pattern is a sequence composed of first value(s) and second value(s), and wherein the first value represents puncturing and the second value represents no puncturing.

89. The method of any one of claims 71 to 84, wherein data bits carried in the first signal before modulation have been subjected to selection; and
wherein the first signal excludes a modulated symbol corresponding to an unselected data bit, and/or no modulated symbol is transmitted on a time-domain resource and/or a frequency-domain resource of the modulated symbol corresponding to the unselected data bit; or
an unselected data bit in the first signal is fixed to be a first target value, or a modulated symbol corresponding to an unselected data bit in the first signal is fixed to be a first target value, or no modulation is performed on an unselected data bit in the first signal.

90. The method of claim 89, wherein data bits selected by different zero-power devices are different.

91. The method of claim 89 or 90, wherein
the data bits carried in the first signal before modulation are selected based on a data transmission pattern corresponding to the first signal.

92. The method of claim 91, wherein the data transmission pattern is a sequence composed of first value(s) and second value(s), and wherein the first value represents non-selection and the second value represents selection.

93. The method of claim 88 or 92, wherein
each value in the data transmission pattern is associated with S data bits, S being a positive integer.

94. The method of claim 93, wherein
in a case of S = 1, the data transmission pattern is periodically applied to data bit processing; or
in a case of S > 1 and that the S data bits are consecutive, the data transmission pattern is periodically applied to data bit processing.

95. The method of any one of claims 71 to 84, wherein modulated symbols carried in the first signal have been subjected to puncturing; and
wherein the first signal excludes a modulated symbol at a puncturing position, and/or no modulated symbol is transmitted on a time-domain resource and/or a frequency-domain resource of the modulated symbol at the puncturing position; or
a modulated symbol at a puncturing position in the first signal is fixed to be a second target value.

96. The method of claim 95, wherein modulated symbol puncturing positions are different for different zero-power devices.

97. The method of claim 95 or 96, wherein
modulated symbol puncturing position(s) corresponding to the first signal are determined based on a data transmission pattern corresponding to the first signal.

98. The method of claim 97, wherein the data transmission pattern is a sequence composed of first value(s) and second value(s), and wherein the first value represents puncturing and the second value represents no puncturing.

99. The method of any one of claims 71 to 84, wherein modulated symbols carried in the first signal have been subjected to selection; and
wherein the first signal excludes an unselected modulated symbol, and/or no modulated symbol is transmitted on a time-domain resource and/or a frequency-domain resource of the unselected modulated symbol; or
an unselected modulated symbol in the first signal is fixed to be a second target value.

100. The method of claim 99, wherein modulated symbols selected by different zero-power devices are different.

101. The method of claim 99 or 100, wherein
the modulated symbols in the first signal are selected based on a data transmission pattern corresponding to the first signal.

102. The method of claim 101, wherein the data transmission pattern is a sequence composed of first value(s) and second value(s), and wherein the first value represents non-selection and the second value represents selection.

103. The method of claim 98 or 102, wherein
each value in the data transmission pattern is associated with W modulated symbols, W being a positive integer.

104. The method of claim 103, wherein
in a case of W = 1, the data transmission pattern is periodically applied to modulated symbol processing; or
in a case of W > 1 and that the W modulated symbols are consecutive, the data transmission pattern is periodically applied to modulated symbol processing.

105. The method of claim 88, 92, 93, 94, 98, 102, 103 or 104, wherein
a number or proportion of the first values or the second values in the data transmission pattern does not exceed a first threshold.

106. The method of claim 105, wherein
the first threshold is determined based on at least one of: a data transmission code rate, a transport block size (TBS), or a data encoding manner.

107. The method of any one of claims 71 to 106, further comprising: before receiving, by the communication device, the first signal from the zero-power device,
receiving, by the communication device, a first sequence from the zero-power device;
wherein the first sequence comprises at least one of: part or all of identity information of the zero-power device, data control information corresponding to the first signal, or indication information of a data transmission pattern corresponding to the first signal.

108. The method of claim 107, wherein
CRC check bits in the first signal are scrambled based on part or all of the information in the first sequence.

109. The method of claim 107 or 108, wherein the first sequence is a preamble sequence used in an access procedure, or the first sequence is a sequence carrying relevant information of the zero-power device.

110. The method of any one of claims 88, 92, 93, 94, 98, and 102 to 109, wherein
the data transmission pattern is determined based on at least one of: scheduling information, data control information, an identifier of the zero-power device, an identifier of a group to which the zero-power device belongs, a cell identifier, or a pre-transmitted sequence.

111. The method of any one of claims 88, 92, 93, 94, 98, and 102 to 109, wherein
the data transmission pattern is obtained by expanding an initial data transmission pattern based on at least one of:
a data transmission code rate, a transport block size (TBS), or a data encoding manner.

112. The method of claim 111, wherein
the initial data transmission pattern is predefined by a protocol, or the initial data transmission pattern is configured by a network.

113. The method of any one of claims 88, 92, 93, 94, 98, and 102 to 110, wherein
the data transmission pattern is configured or indicated by a network device; or
the data transmission pattern is generated based on a parameter configured or indicated by a network device; or
the data transmission pattern is generated by the zero-power device based on at least one of: an identifier of the zero-power device, an identifier of a group to which the zero-power device belongs, or a cell identifier; or
the data transmission pattern is a target data transmission pattern among a plurality of preset data transmission patterns; or
the data transmission pattern is a target data transmission pattern in a target data transmission pattern set among a plurality of preset data transmission pattern sets; or
the data transmission pattern is determined based on a first sequence associated with the data transmission pattern.

114. The method of claim 113, wherein
in a case that the data transmission pattern is the target data transmission pattern among the plurality of preset data transmission patterns, the target data transmission pattern is indicated by a network device, or the target data transmission pattern is determined by the zero-power device based on at least one of: an identifier of the zero-power device, an identifier of a group to which the zero-power device belongs, or a cell identifier;
in a case that the data transmission pattern is the target data transmission pattern in the target data transmission pattern set among the plurality of preset data transmission pattern sets, the target data transmission pattern set is indicated by the network device, and the target data transmission pattern is selected by the zero-power device randomly or the target data transmission pattern is determined by the zero-power device based on at least one of: the identifier of the zero-power device, the identifier of the group to which the zero-power device belongs, or the cell identifier.

115. The method of claim 113, wherein
in a case that the data transmission pattern is determined based on the first sequence associated with the data transmission pattern, an association relation between the data transmission pattern and the first sequence is predefined by a protocol, or is configured or indicated by a network device.

116. The method of any one of claims 71 to 84, wherein time-domain resources in time-frequency resources corresponding to the first signal have been subjected to puncturing; and
wherein the first signal excludes a modulated symbol to be transmitted on a time-domain resource at a puncturing position, and/or no modulated symbol is transmitted on the time-domain resource at the puncturing position; or
a modulated symbol to be transmitted on a time-domain resource at a puncturing position is postponed to be transmitted on a next time-domain resource that is not punctured.

117. The method of claim 116, wherein time-domain resource puncturing positions are different for different zero-power devices.

118. The method of claim 116 or 117, wherein
time-domain resource puncturing position(s) corresponding to the first signal are determined based on a time-domain resource pattern corresponding to the first signal.

119. The method of claim 118, wherein the time-domain resource pattern is a sequence composed of third value(s) and fourth value(s), and wherein the third value represents puncturing and the fourth value represents no puncturing.

120. The method of any one of claims 71 to 84, wherein time-domain resources in time-frequency resources corresponding to the first signal have been subjected to selection; and
wherein the first signal excludes a modulated symbol to be transmitted on an unselected time-domain resource, and/or no modulated symbol is transmitted on the unselected time-domain resource; or
a modulated symbol to be transmitted on an unselected time-domain resource is postponed to be transmitted on a next time-domain resource that is selected.

121. The method of claim 120, wherein time-domain resources selected by different zero-power devices are different.

122. The method of claim 120 or 121, wherein
modulated symbols in the first signal are selected based on a time-domain resource pattern corresponding to the first signal.

123. The method of claim 122, wherein the time-domain resource pattern is a sequence composed of third value(s) and fourth value(s), and wherein the third value represents non-selection and the fourth value represents selection.

124. The method of claim 119 or 123, wherein
each value in the time-domain resource pattern is associated with K time-domain resources, K being a positive integer.

125. The method of claim 124, wherein
in a case of K = 1, the time-domain resource pattern is periodically applied to time-domain resource processing; or
in a case of K > 1 and the K time-domain resources are consecutive, the time-domain resource pattern is periodically applied to time-domain resource processing.

126. The method of claim 119, 123, 124 or 125, wherein
a number or proportion of the third values or the fourth values in the time-domain resource pattern does not exceed a second threshold.

127. The method of claim 126, wherein
the second threshold is determined based on at least one of: a data transmission code rate, a transport block size (TBS), or a data encoding manner.

128. The method of any one of claims 116 to 127, wherein
granularity of the time-domain resources is one of: a slot or a symbol.

129. The method of any one of claims 116 to 127, wherein
the time-domain resources are a time-domain resource of a single modulated symbol * R, wherein R is a positive integer.

130. The method of any one of claims 116 to 129, wherein
the time-frequency resources corresponding to the first signal are indicated by a network device through scheduling, or the time-frequency resources corresponding to the first signal are predefined by a protocol, or the time-frequency resources corresponding to the first signal are obtained by applying a frequency-domain offset to time-frequency resources occupied by an incoming signal corresponding to the first signal.

131. The method of any one of claims 71 to 84 and 116 to 130, further comprising: before receiving, by the communication device, the first signal from the zero-power device,
receiving, by the communication device, a second sequence from the zero-power device;
wherein the second sequence comprises at least one of: part or all of identity information of the zero-power device, data control information corresponding to the first signal, or indication information of a time-domain resource pattern corresponding to the first signal.

132. The method of claim 131, wherein
CRC check bits in the first signal are scrambled based on part or all of the information in the second sequence.

133. The method of claim 131 or 132, wherein the second sequence is a preamble sequence used in an access procedure, or the second sequence is a sequence carrying relevant information of the zero-power device.

134. The method of claim 118, 119, 122, 123, 124, 125, 126, 127, 131, 132 or 133, wherein
the time-domain resource pattern is determined based on at least one of: scheduling information, data control information, an identifier of the zero-power device, an identifier of a group to which the zero-power device belongs, a cell identifier, or a pre-transmitted sequence.

135. The method of claim 118, 119, 122, 123, 124, 125, 126, 127, 131, 132 or 133, wherein
the time-domain resource pattern is obtained by expanding an initial time-domain resource pattern based on at least one of:
a data transmission code rate, a transport block size (TBS), or a data encoding manner.

136. The method of claim 135, wherein
the initial time-domain resource pattern is predefined by a protocol, or the initial time-domain resource pattern is configured by a network.

137. The method of claim 118, 119, 122, 123, 124, 125, 126, 127, 131, 132, or 134, wherein
the time-domain resource pattern is configured or indicated by a network device; or
the time-domain resource pattern is generated based on a parameter configured or indicated by a network device; or
the time-domain resource pattern is generated by the zero-power device based on at least one of: an identifier of the zero-power device, an identifier of a group to which the zero-power device belongs, or a cell identifier; or
the time-domain resource pattern is a target time-domain resource pattern among a plurality of preset time-domain resource patterns; or
the time-domain resource pattern is a target time-domain resource pattern in a target time-domain resource pattern set among a plurality of preset time-domain resource pattern sets; or
the time-domain resource pattern is determined based on a second sequence associated with the time-domain resource pattern.

138. The method of claim 137, wherein
in a case that the time-domain resource pattern is the target time-domain resource pattern among the plurality of preset time-domain resource patterns, the target time-domain resource pattern is indicated by a network device, or the target time-domain resource pattern is determined by the zero-power device based on at least one of: an identifier of the zero-power device, an identifier of a group to which the zero-power device belongs, or a cell identifier;
in a case that the time-domain resource pattern is the target time-domain resource pattern in the target time-domain resource pattern set among the plurality of preset time-domain resource pattern sets, the target time-domain resource pattern set is indicated by the network device, and the target time-domain resource pattern is selected by the zero-power device randomly or the target time-domain resource pattern is determined by the zero-power device based on at least one of: the identifier of the zero-power device, the identifier of the group to which the zero-power device belongs, or the cell identifier.

139. The method of claim 137, wherein
in a case that the time-domain resource pattern is determined based on the second sequence associated with the time-domain resource pattern, an association relation between the time-domain resource pattern and the second sequence is predefined by a protocol, or is configured or indicated by a network device.

140. The method of any one of claims 71 to 139, wherein
the first signal is a backscattered signal, or the first signal is a signal actively transmitted by the zero-power device.

141. A zero-power device, comprising:
a communication unit, configured to transmit a first signal;
wherein the first signal has been subjected to at least one encoding, the at least one encoding comprising a first encoding, and the first encoding being used for a receiving end to correct an error that occurs to the first signal during transmission of the first signal.

142. A communication device, comprising:
a communication unit, configured to receive a first signal from a zero-power device;
wherein the first signal has been subjected to at least one encoding, the at least one encoding comprising a first encoding, and the first encoding being used for the communication device to correct an error that occurs to the first signal during transmission of the first signal.

143. A zero-power device, comprising a processor and a memory, wherein the memory is configured to store a computer program, and the processor is configured to call and run the computer program stored in the memory to enable the zero-power device to perform the method of any one of claims 1 to 70.

144. A communication device, comprising a processor and a memory, wherein the memory is configured to store a computer program, and the processor is configured to call and run the computer program stored in the memory to enable the communication device to perform the method of any one of claims 71 to 140.

145. A chip, comprising a processor configured to call and run a computer program from a memory and run the computer program to enable a device installed with the chip to perform the method of any one of claims 1 to 70.

146. A chip, comprising a processor configured to call and run a computer program from a memory and run the computer program to enable a device installed with the chip to perform the method of any one of claims 71 to 140.

147. A computer-readable storage medium for storing a computer program that, when executed, performs the method of any one of claims 1 to 70.

148. A computer-readable storage medium for storing a computer program that, when executed, performs the method of any one of claims 71 to 140.

149. A computer program product, comprising computer program instructions that, when executed, perform the method of any one of claims 1 to 70.

150. A computer program product, comprising computer program instructions that, when executed, perform the method of any one of claims 71 to 140.

151. A computer program that, when executed, performs the method of any one of claims 1 to 70.

152. A computer program that, when executed, performs the method of any one of claims 71 to 140.
